# EUROPEAN PATENT APPLICATION

(11) **EP 4 694 056 A1**
(43) Date of publication of application: **11.02.2026**
(21) Application number: 24799865.1
(22) Date of filing: 22.04.2024
(51) Int. Cl.: H04L 41/0816, H04W 28/24

(54) **DATA STREAM ADAPTIVE TRANSMISSION METHOD, APPARATUS AND SYSTEM**

(30) Priority: 04.05.2023 CN 202310496194
(71) Applicant: Huawei Technologies Co., Ltd., Shenzhen, Guangdong 518129 (CN)
(72) Inventor: WEN, Xuan, Shenzhen, Guangdong 518129 (CN); MA, Jingwang, Shenzhen, Guangdong 518129 (CN)
(74) Representative: Isarpatent
(86) International application number: PCT/CN2024/089022
(87) International publication number: WO 2024/227407

(57) **Abstract**

Embodiments of this application provide an adaptive data flow transmission method, an apparatus, and a system, relating to the field of communication technologies. The method is used to perform, when a frame rate of a downlink data flow of a service changes, network resource adaptation promptly based on the frame rate of the data flow, to avoid a waste of network resources or a packet loss of media frame data, so as to improve network resource utilization and user experience. The method includes: receiving a data flow that is of a service and that is sent by an application server to a terminal, where the data flow includes one or more protocol data unit sets each including one or more downlink data packets; calculating a frame rate of the data flow; determining, based on the frame rate of the data flow, a QoS profile that adapts to the frame rate of the data flow; and transmitting the data flow based on the QoS profile that adapts to the frame rate of the data flow. In this way, the data flow can be transmitted by using the adapted QoS profile based on the frame rate of the data flow.

## Description

This application claims priority to Chinese Patent Application No. 202310496194.8, filed with the China National Intellectual Property Administration on May 04, 2023 and entitled "ADAPTIVE DATA FLOW TRANSMISSION METHOD, APPARATUS, AND SYSTEM", which is incorporated herein by reference in its entirety.

### TECHNICAL FIELD

This application relates to the field of communication technologies, and in particular, to an adaptive data flow transmission method, an apparatus, and a system.

### BACKGROUND

In current 5th generation mobile communication technology (5th generation mobile communication technology, 5G) network architectures, when a terminal establishes a service connection to a media server (server), a 5G network configures a corresponding quality of service (quality of service, QoS) flow (flow) for service data of the terminal based on user subscription information of the terminal. A QoS profile corresponding to each QoS flow includes parameters of the QoS flow. The parameters of the QoS flow are defined on a per-packet basis, including a data packet delay budget, a data packet error rate, and the like. All the parameters are typically specified as fixed values. Therefore, after a downlink service of the server arrives on a network side, the network side transmits the downlink service on a per-packet basis based on QoS parameters configured during session establishment. In the process of transmitting the downlink service on the network side, network elements (such as a user plane function (user plane function, UPF) network element and a radio access network (radio access network, RAN) device) always schedule network resources based on the fixed QoS parameters for transmission of data flows of the downlink service.

However, a frame rate of the data flows of the service is not constant, which need to be adjusted in some cases to improve quality of experience (quality of experience, QoE). Examples are as follows: (1) When the service is in a dynamic scenario, a higher frame rate is required to prevent image jitter, and when the service is in a static scenario, a lower frame rate may be used. (2) For online games, when network congestion occurs, the server may reduce the frame rate to ensure normal running of the service. (3) A quantity of frames is positively correlated with power consumption of the terminal, and when the terminal is in a standby state or an inactive state, the frame rate needs to be reduced to decrease the power consumption of the terminal. When the frame rate of the service changes, a QoS requirement of the service may also vary. However, in related technologies, the network elements on the network side use fixed QoS profiles for downlink service transmission. Consequently, a service requirement change cannot be flexibly adapted, thereby affecting service experience.

### SUMMARY

Embodiments of this application provide an adaptive data flow transmission method, an apparatus, and a system. The method is used to perform, when a frame rate of a downlink data flow of a service changes, network resource adaptation promptly based on the frame rate of the data flow, to avoid a waste of network resources or a packet loss of media frame data, so as to improve network resource utilization and user experience.

To resolve the foregoing technical problems, the following technical solutions are used in embodiments of this application.

According to a first aspect, an embodiment of this application provides an adaptive data flow transmission method, including: A first network element receives a data flow that is of a service and that is sent by an application server to a terminal. The data flow includes one or more protocol data unit sets each including one or more downlink data packets. The first network element determines a frame rate of the data flow. The first network element determines, based on the frame rate of the data flow, a QoS profile that adapts to the frame rate of the data flow. The first network element transmits the data flow based on the QoS profile that adapts to the frame rate of the data flow.

In an example, the first network element may be a user plane network element.

In the foregoing solution, the first network element determines the frame rate of the data flow of the service, and selects, based on the determined frame rate of the data flow of the service, the QoS profile that adapts to the frame rate of the data flow of the service, to transmit the data flow of the service. In this way, when the frame rate of the data flow is different from a frame rate corresponding to a QoS profile for current transmission of the data flow, an appropriate QoS profile is selected promptly to transmit the data flow. This solution can reduce a network resource waste or a packet loss of media frame data, and improve network resource utilization and user experience.

In a possible implementation, the frame rate of the data flow is determined by an average of n time intervals. The time interval is a time difference between downlink data packets that are in two adjacent protocol data unit sets of the data flow and that first arrive at the first network element, where n is an integer greater than or equal to 1. A downlink data packet that first arrives at the first network element may also be understood as a downlink data packet that is first received by the first network element in one or more downlink data packets included in a protocol data unit set. This facilitates detection of the frame rate of the data flow.

In a possible implementation, the frame rate of the data flow is a frame rate, in one or more frame rates, that is closest to the average of the n time intervals. It may be understood that the n time intervals may be n continuously counted time intervals.

In a possible implementation, that the first network element determines the frame rate of the data flow includes: If the frame rate of the data flow changes during a period prior to a first time point, and the frame rate of the data flow remains unchanged during a period after the first time point, the first network element determines the frame rate of the data flow based on the n time intervals during the period after the first time point. When the frame rate remains unchanged, the first network element determines the frame rate of the data flow based on the n time intervals during the period after the first time point, so that reliability of the frame rate of the data flow can be improved.

In a possible implementation, the frame rate of the data flow is determined by a quantity of protocol data unit sets that arrive at the first network element during a period.

In a possible implementation, the frame rate of the data flow is a frame rate, in the one or more frame rates, that is closest to the quantity of protocol data unit sets that arrive at the first network element during the period.

In a possible implementation, that the first network element determines the frame rate of the data flow includes: If the frame rate of the data flow changes during a period prior to a first time point, and the frame rate of the data flow remains unchanged during a period after the first time point, the first network element determines the frame rate of the data flow based on a quantity of protocol data unit sets received by the first network element during the period of time after the first time point. When the frame rate remains unchanged, the frame rate of the data flow is determined based on the quantity of protocol data unit sets received by the first network element in the period of time, so that reliability of the frame rate of the data flow can be improved.

In a possible implementation, if an absolute value of a deviation between two adjacent time intervals in at least one count is greater than or equal to a first abnormality threshold, it is determined that the frame rate of the data flow has changed.

In a possible implementation, the method provided in this embodiment of this application further includes: The first network element sends the frame rate of the data flow, where the frame rate of the data flow is used to determine the quality of service QoS profile that adapts to the frame rate of the data flow. For example, the first network element may send the frame rate of the data flow to an access network device, so that the access network device reselects an adapted QoS profile based on the frame rate of the data flow to transmit the data flow of the service to the terminal. For another example, the first network element may send the frame rate of the data flow to a PCF network element, so that the PCF network element updates the QoS profile of the data flow of the service based on the frame rate of the data flow, and then sends an updated QoS profile to the first network element or an access network device, so that the first network element or the access network device transmits the data flow based on the updated QoS profile.

In a possible implementation, that the first network element sends the frame rate of the data flow includes: If the frame rate of the data flow is different from a frame rate associated with a QoS profile configured for the data flow, the first network element sends the frame rate of the data flow. When the frame rate of the data flow detected by the first network element is different from the frame rate associated with the QoS profile configured for the data flow, the first network element sends the frame rate of the data flow, to obtain, in a timely manner, the QoS profile that adapts to the frame rate of the data flow.

In a possible implementation, the method provided in this embodiment of this application further includes: The first network element receives a first message including service configuration information of the service. The service configuration information is used to determine to adjust the QoS profile of the data flow based on the frame rate of the data flow of the service. The first network element determines, based on the first message, the frame rate of the data flow and/or to adjust the QoS profile of the data flow based on the frame rate of the data flow of the service. The first message is configured for the first network element, so that the first network element senses that the frame rate of the data flow and/or adjusting the QoS profile of the data flow based on the frame rate of the data flow of the service need/needs to be determined subsequently.

In a possible implementation, the service configuration information includes one or more frame rates, a QoS requirement corresponding to each frame rate, and a frame rate detection related parameter. The frame rate detection related parameter includes at least one of the following: a frame rate detection periodicity, the first abnormality threshold, a frame rate count, and a second abnormality threshold. The first abnormality threshold is used to determine a frame rate change of the data flow. The second abnormality threshold is used to determine whether the frame rate of the data flow is the same as the frame rate associated with the QoS profile configured for the data flow. The frame rate detection periodicity is used to determine a periodicity for calculating the frame rate of the data flow. The frame rate count is a quantity of time intervals that need to be obtained for determining the frame rate of the data flow. The frame rate detection related parameter is configured for the first network element, so that the first network element knows the periodicity for determining the frame rate of the data flow, whether the frame rate changes, and a quantity of time intervals that need to be counted for determining the frame rate/determining whether the frame rate changes.

In a possible implementation, the service configuration information further includes first indication information, or the first message further includes the first indication information. The first indication information indicates to adjust the QoS profile of the data flow based on the frame rate of the data flow of the service and/or determine the frame rate of the data flow. In this way, the first indication information may explicitly indicate, to the first network element, whether the QoS profile of the data flow needs to be adjusted based on the frame rate of the data flow of the service and/or the frame rate of the data flow needs to be determined.

In a possible implementation, that the first network element determines, based on the frame rate of the data flow, the QoS profile that adapts to the frame rate of the data flow includes: The first network element sends the frame rate of the data flow to a policy control network element; and the first network element determines, from the policy control network element, the QoS profile that adapts to the frame rate of the data flow. The first network element sends the determined frame rate of the data flow to the policy control network element, so that the policy control network element updates the QoS profile for the first network element promptly based on the frame rate of the data flow detected by the first network element.

In a possible implementation, that the first network element determines the QoS profile that adapts to the frame rate of the data flow includes: The first network element determines, from a QoS profile associated with each of the one or more frame rates, the QoS profile that adapts to the frame rate of the data flow. In this solution, when the first network element has one or more frame rates, the first network element may select an adapted QoS profile from the one or more frame rates based on the frame rate of the data flow detected by the first network element. Optionally, the one or more frame rates may be pre-configured in the first network element, or may be configured by an AF network element or the policy control network element for the first network element in advance, or may be agreed on in a protocol. This is not limited in embodiments of this application.

In a possible implementation, the method provided in this embodiment of this application further includes: The first network element receives the one or more frame rates and the QoS profile associated with each frame rate. In this way, after obtaining the frame rate of the data flow through calculation, the first network element may select, from the QoS profile associated with each frame rate, the QoS profile that adapts to the frame rate of the data flow, to transmit the data flow. For example, the first network element may obtain, from the policy control network element, the one or more frame rates and the QoS profile associated with each frame rate.

According to a second aspect, an embodiment of this application provides an adaptive data flow transmission method, including: A policy control network element receives a second message including a frame rate that is of a data flow of a service and that is calculated by a first network element. The second message is used to request to update a quality of service QoS profile of the data flow based on the frame rate of the data flow. The policy control network element determines, based on the frame rate of the data flow and a QoS requirement corresponding to the frame rate of the data flow, a QoS profile that adapts to the frame rate of the data flow. The policy control network element sends the QoS profile that adapts to the frame rate of the data flow.

In the foregoing solution, the policy control network element obtains the frame rate that is of the data flow of the service and that is determined by the first network element, and then the policy control network element generates, based on the frame rate of the data flow and the QoS requirement corresponding to the frame rate of the data flow, the QoS profile that adapts to the frame rate of the data flow. In this way, the QoS profile of the data flow is updated promptly based on the frame rate of the data flow. Then, the policy control network element sends the QoS profile, so that a network element (for example, the first network element or an access network device) that receives the QoS profile transmits the data flow based on the updated QoS profile of the data flow, to implement adaptive transmission of the data flow.

For example, the policy control network element may send one or more frame rates and a QoS profile associated with each frame rate to the access network device and/or a user plane network element.

According to a third aspect, an embodiment of this application provides an adaptive data flow transmission method, including: A policy control network element obtains service configuration information, where the service configuration information includes at least one or more frame rates and a QoS requirement associated with each frame rate. The policy control network element obtains, based on the service configuration information, the QoS profile associated with each frame rate. The policy control network element sends the one or more frame rates and the QoS profile associated with each frame rate.

For example, the policy control network element may obtain the service configuration information from an AF network element. For another example, the policy control network element may send the one or more frame rates and the QoS profile associated with each frame rate to an access network device and/or a first network element.

In the foregoing solution, the policy control network element may obtain, based on the obtained service configuration information, QoS requirements corresponding to different frame rates, and then obtain, based on the QoS requirements corresponding to the different frame rates, a QoS profile associated with each frame rate. Finally, the one or more frame rates and the QoS profile associated with each frame rate are sent, so that the access network device and/or a user plane network element subsequently select/selects, based on the frame rate of the data flow, a QoS profile that adapts to the frame rate of the service flow from the QoS profile associated with each frame rate, to transmit the service flow, thereby implementing adaptive transmission of the data flow.

According to a fourth aspect, an embodiment of this application provides an adaptive data flow transmission method, including: An access network device determines to update a QoS profile of a data flow of a service to a first QoS profile, where the first QoS profile adapts to a frame rate of the data flow of the service. The access network device adjusts a resource scheduling policy based on the first QoS profile, and transmits the data flow of the service to a terminal.

In a possible implementation, that the access network device determines to update the QoS profile of the data flow of the service to the first QoS profile includes: The access network device obtains an updated QoS profile (namely, the first QoS profile) of the data flow of the service from an AMF network element of the terminal.

In a possible implementation, that the access network device determines to update the QoS profile of the data flow of the service to the first QoS profile includes: The access network device receives a frame rate of the data flow of the service from a user plane network element. The access network device determines, from one or more frame rates and a quality of service QoS profile corresponding to each frame rate, a QoS profile corresponding to the frame rate of the data flow of the service as the first QoS profile.

In a possible implementation, the method provided in this embodiment of this application further includes: The access network device obtains first indication information, where the first indication information indicates to adaptively adjust the QoS profile of the data flow based on the frame rate of the data flow of the service. In this way, it is convenient for the access network device to sense that the QoS profile of the data flow needs to be adaptively adjusted based on the frame rate of the data flow of the service.

Correspondingly, after receiving the frame rate of the data flow of the service from the user plane network element, the access network device transmits the data flow of the service based on the QoS profile that corresponds to the frame rate of the data flow of the service and that is in the quality of service QoS profile corresponding to each frame rate.

In a possible implementation, the method provided in this embodiment of this application further includes: The access network device receives a first rule. The first rule includes one or more frame rates, a quality of service QoS profile corresponding to each frame rate, and/or the first indication information. For example, the access network device may obtain the first rule from a policy control network element, a session management network element, or the user plane network element. This is not limited in embodiments of this application.

According to a fifth aspect, an embodiment of this application provides a communication apparatus. The communication apparatus can implement the method in any possible implementation of the first aspect, and therefore can also implement beneficial effect in any possible implementation of the first aspect. The communication apparatus may be a first network element, or may be an apparatus that supports a first network element in implementing the method in any possible implementation of the first aspect, for example, a chip used in the first network element. The first network element may implement the foregoing method through software, hardware, or hardware executing corresponding software.

In an example, the communication apparatus may include a processing unit and a communication unit. Optionally, the communication apparatus may further include a storage unit. The processing unit is configured to support the first network element in implementing the processing steps performed by the first network element in the first aspect or the possible implementations of the first aspect. The communication unit is configured to support the first network element in implementing the receiving/sending steps performed by the first network element in the first aspect or the possible implementations of the first aspect.

For example, when the communication apparatus is a chip or a chip system in the first network element, the processing unit may be a processor, and the communication unit may be a communication interface. For example, the communication interface may be an input/output interface, a pin, a circuit, or the like. The processing unit executes instructions stored in the storage unit, so that the first network element implements the adaptive data flow transmission method described in any one of the possible implementations of the first aspect. The storage unit may be a storage unit (for example, a register or a cache) in the chip, or may be a storage unit (for example, a read-only memory or a random access memory) that is in the first network element and that is outside the chip.

According to a sixth aspect, an embodiment of this application provides a communication apparatus. The communication apparatus can implement the method in any possible implementation of the second aspect, and therefore can also implement beneficial effect in any possible implementation of the second aspect. The communication apparatus may be a policy control network element, or may be an apparatus that supports a policy control network element in implementing the method in any possible implementation of the second aspect, for example, a chip used in the policy control network element. The policy control network element may implement the foregoing method through software, hardware, or hardware executing corresponding software.

In an example, the communication apparatus may include a processing unit and a communication unit. Optionally, the communication apparatus may further include a storage unit. The processing unit is configured to support the policy control network element in implementing the processing steps performed by the policy control network element in the second aspect or the possible implementations of the second aspect. The communication unit is configured to support the policy control network element in implementing the receiving/sending steps performed by the policy control network element in the second aspect or the possible implementations of the second aspect.

For example, when the communication apparatus is a chip or a chip system in the policy control network element, the processing unit may be a processor, and the communication unit may be a communication interface. For example, the communication interface may be an input/output interface, a pin, a circuit, or the like. The processing unit executes instructions stored in the storage unit, so that the policy control network element implements the adaptive data flow transmission method described in any one of the possible implementations of the second aspect. The storage unit may be a storage unit (for example, a register or a cache) in the chip, or may be a storage unit (for example, a read-only memory or a random access memory) that is in the policy control network element and that is outside the chip.

According to a seventh aspect, an embodiment of this application provides a communication apparatus. The communication apparatus can implement the method in any possible implementation of the third aspect, and therefore can also implement beneficial effect in any possible implementation of the third aspect. The communication apparatus may be a policy control network element, or may be an apparatus that supports a policy control network element in implementing the method in any possible implementation of the third aspect, for example, a chip used in the policy control network element. The policy control network element may implement the foregoing method through software, hardware, or hardware executing corresponding software.

In an example, the communication apparatus may include a processing unit and a communication unit. Optionally, the communication apparatus may further include a storage unit. The processing unit is configured to support the policy control network element in implementing the processing steps performed by the policy control network element in the third aspect or the possible implementations of the third aspect. The communication unit is configured to support the policy control network element in implementing the receiving/sending steps performed by the policy control network element in the third aspect or the possible implementations of the third aspect.

For example, when the communication apparatus is a chip or a chip system in the policy control network element, the processing unit may be a processor, and the communication unit may be a communication interface. For example, the communication interface may be an input/output interface, a pin, a circuit, or the like. The processing unit executes instructions stored in the storage unit, so that the policy control network element implements the adaptive data flow transmission method described in any one of the possible implementations of the third aspect. The storage unit may be a storage unit (for example, a register or a cache) in the chip, or may be a storage unit (for example, a read-only memory or a random access memory) that is in the policy control network element and that is outside the chip.

According to an eighth aspect, an embodiment of this application provides a communication apparatus. The communication apparatus can implement the method in any possible implementation of the fourth aspect, and therefore can also implement beneficial effect in any possible implementation of the fourth aspect. The communication apparatus may be an access network device, or may be an apparatus that supports an access network device in implementing the method in any possible implementation of the fourth aspect, for example, a chip used in the access network device. The access network device may implement the foregoing method through software, hardware, or hardware executing corresponding software.

In an example, the communication apparatus may include a processing unit and a communication unit. Optionally, the communication apparatus may further include a storage unit. The processing unit is configured to support the access network device in implementing the processing steps performed by the access network device in the fourth aspect or the possible implementations of the fourth aspect. The communication unit is configured to support the access network device in implementing the receiving/sending steps performed by the access network device in the fourth aspect or the possible implementations of the fourth aspect.

For example, when the communication apparatus is a chip or a chip system in the access network device, the processing unit may be a processor, and the communication unit may be a communication interface. For example, the communication interface may be an input/output interface, a pin, a circuit, or the like. The processing unit executes instructions stored in the storage unit, so that the access network device implements the adaptive data flow transmission method described in any one of the possible implementations of the fourth aspect. The storage unit may be a storage unit (for example, a register or a cache) in the chip, or may be a storage unit (for example, a read-only memory or a random access memory) that is in the access network device and that is outside the chip.

According to a ninth aspect, an embodiment of this application provides a computer-readable storage medium. The computer-readable storage medium stores a computer program or instructions. When the computer program or the instructions are run on a computer, the computer is enabled to perform the adaptive data flow transmission method described in the first aspect and any one of the possible implementations of the first aspect. The computer may be a first network element.

According to a tenth aspect, an embodiment of this application provides a computer-readable storage medium. The computer-readable storage medium stores a computer program or instructions. When the computer program or the instructions are run on a computer, the computer is enabled to perform the adaptive data flow transmission method described in the second aspect and any one of the possible implementations of the second aspect. The computer may be a policy control network element.

According to an eleventh aspect, an embodiment of this application provides a computer-readable storage medium. The computer-readable storage medium stores a computer program or instructions. When the computer program or the instructions are run on a computer, the computer is enabled to perform the adaptive data flow transmission method described in the third aspect and any one of the possible implementations of the third aspect. The computer may be a policy control network element.

According to a twelfth aspect, an embodiment of this application provides a computer-readable storage medium. The computer-readable storage medium stores a computer program or instructions. When the computer program or the instructions are run on a computer, the computer is enabled to perform the adaptive data flow transmission method described in the fourth aspect and any one of the possible implementations of the fourth aspect. The computer may be an access network device.

According to a thirteenth aspect, an embodiment of this application provides a computer program product including instructions. When the instructions are run on a computer, the computer is enabled to perform the adaptive data flow transmission method described in the first aspect or the possible implementations of the first aspect.

According to a fourteenth aspect, an embodiment of this application provides a computer program product including instructions. When the instructions are run on a computer, the computer is enabled to perform the adaptive data flow transmission method described in the second aspect or the possible implementations of the second aspect.

According to a fifteenth aspect, an embodiment of this application provides a computer program product including instructions. When the instructions are run on a computer, the computer is enabled to perform the adaptive data flow transmission method described in the third aspect or the possible implementations of the third aspect.

According to a sixteenth aspect, an embodiment of this application provides a computer program product including instructions. When the instructions are run on a computer, the computer is enabled to perform the adaptive data flow transmission method described in the fourth aspect or the possible implementations of the fourth aspect.

According to a seventeenth aspect, an embodiment of this application provides a communication apparatus, configured to implement the method in any one of the possible designs of the first aspect. The communication apparatus may be the first network element, a device including the first network element, or a component (for example, a chip) used in the first network element. The communication apparatus includes a corresponding module or unit for implementing the foregoing method. The module or unit may be implemented by hardware or software, or by hardware executing corresponding software. The hardware or the software includes one or more modules or units corresponding to the foregoing functions. It should be understood that the communication apparatus described in the seventeenth aspect may further include a bus and a memory. The memory is configured to store code and data. Optionally, at least one processor, a communication interface, and the memory are coupled to each other.

According to an eighteenth aspect, an embodiment of this application provides a communication apparatus, configured to implement the method in the second aspect or any one of the possible designs of the second aspect. The communication apparatus may be the policy control network element, a device including the policy control network element, or a component (for example, a chip) used in the policy control network element. The communication apparatus includes a corresponding module or unit for implementing the foregoing method. The module or unit may be implemented by hardware or software, or by hardware executing corresponding software. The hardware or the software includes one or more modules or units corresponding to the foregoing functions. It should be understood that the communication apparatus described in the eighteenth aspect may further include a bus and a memory. The memory is configured to store code and data. Optionally, at least one processor, a communication interface, and the memory are coupled to each other.

According to a nineteenth aspect, an embodiment of this application provides a communication apparatus, configured to implement the method in the third aspect or any one of the possible designs of the third aspect. The communication apparatus may be the policy control network element, a device including the policy control network element, or a component (for example, a chip) used in the policy control network element. The communication apparatus includes a corresponding module or unit for implementing the foregoing method. The module or unit may be implemented by hardware or software, or by hardware executing corresponding software. The hardware or the software includes one or more modules or units corresponding to the foregoing functions. It should be understood that the communication apparatus described in the nineteenth aspect may further include a bus and a memory. The memory is configured to store code and data. Optionally, at least one processor, a communication interface, and the memory are coupled to each other.

According to a twentieth aspect, an embodiment of this application provides a communication apparatus, configured to implement the method in the fourth aspect or any one of the possible designs of the fourth aspect. The communication apparatus may be the access network device, a device including the access network device, or a component (for example, a chip) used in the access network device. The communication apparatus includes a corresponding module or unit for implementing the foregoing method. The module or unit may be implemented by hardware or software, or by hardware executing corresponding software. The hardware or the software includes one or more modules or units corresponding to the foregoing functions. It should be understood that the communication apparatus described in the twentieth aspect may further include a bus and a memory. The memory is configured to store code and data. Optionally, at least one processor, a communication interface, and the memory are coupled to each other.

According to a twenty-first aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in the first aspect or any one of the possible designs of the first aspect. For example, the communication apparatus may be a first network element or a chip used in a first network element.

According to a twenty-second aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in the second aspect or any one of the possible designs of the second aspect. For example, the communication apparatus may be a policy control network element or a chip used in a policy control network element.

According to a twenty-third aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in the third aspect or any one of the possible designs of the third aspect. For example, the communication apparatus may be a policy control network element or a chip used in a policy control network element.

According to a twenty-fourth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in the fourth aspect or any one of the possible designs of the fourth aspect. For example, the communication apparatus may be an access network device or a chip used in an access network device.

According to a twenty-fifth aspect, an embodiment of this application provides a communication apparatus. The communication apparatus includes one or more modules, configured to implement the method according to any one of the first aspect, the second aspect, the third aspect, and the fourth aspect, and the one or more modules may correspond to the steps in the method according to any one of the first aspect, the second aspect, the third aspect, and the fourth aspect.

According to a twenty-sixth aspect, an embodiment of this application provides a chip system. The chip system includes a processor, and the processor is configured to read and execute a computer program stored in a memory, to perform the method in the first aspect or any possible implementation thereof. Optionally, the chip system may be a single chip or a chip module including a plurality of chips. Optionally, the chip system further includes a memory. The memory and the processor are connected through a circuit or a wire. Optionally, the chip system further includes a communication interface. The communication interface is configured to communicate with a module other than the chip. For example, the chip system may be used in a first network element.

According to a twenty-seventh aspect, an embodiment of this application provides a chip system. The chip system includes a processor, and the processor is configured to read and execute a computer program stored in a memory, to perform the method in the second aspect or any possible implementation thereof. Optionally, the chip system may be a single chip or a chip module including a plurality of chips. Optionally, the chip system further includes a memory. The memory and the processor are connected through a circuit or a wire. Optionally, the chip system further includes a communication interface. The communication interface is configured to communicate with a module other than the chip. For example, the chip system may be used in a policy control network element.

According to a twenty-eighth aspect, an embodiment of this application provides a chip system. The chip system includes a processor, and the processor is configured to read and execute a computer program stored in a memory, to perform the method in the third aspect or any possible implementation thereof. Optionally, the chip system may be a single chip or a chip module including a plurality of chips. Optionally, the chip system further includes a memory. The memory and the processor are connected through a circuit or a wire. Optionally, the chip system further includes a communication interface. The communication interface is configured to communicate with a module other than the chip. For example, the chip system may be used in a policy control network element.

According to a twenty-ninth aspect, an embodiment of this application provides a chip system. The chip system includes a processor, and the processor is configured to read and execute a computer program stored in a memory, to perform the method in the fourth aspect or any possible implementation thereof. Optionally, the chip system may be a single chip or a chip module including a plurality of chips. Optionally, the chip system further includes a memory. The memory and the processor are connected through a circuit or a wire. Optionally, the chip system further includes a communication interface. The communication interface is configured to communicate with a module other than the chip. For example, the chip system may be used in an access network device.

According to a thirtieth aspect, an embodiment of this application provides a communication system. The system includes a first network element, and the first network element is configured to perform the method described in the first aspect or the possible implementations of the first aspect. Optionally, the system may further include a policy control network element and an access network device. The policy control network element is configured to perform the method described in the second aspect or the possible implementations of the second aspect. The access network device is configured to transmit a data flow based on a QoS profile that adapts to a frame rate of the data flow.

According to a thirty-first aspect, an embodiment of this application provides a communication system. The system includes a first network element, and the first network element is configured to perform the method described in the first aspect or the possible implementations of the first aspect. Optionally, the system may further include a policy control network element and an access network device. The policy control network element is configured to perform the method described in the third aspect or the possible implementations of the third aspect. The access network device is configured to transmit a data flow based on a QoS profile that adapts to a frame rate of the data flow.

Any apparatus, computer storage medium, computer program product, chip, or communication system provided above is configured to perform the corresponding method provided above. Therefore, for beneficial effect that can be achieved, refer to the beneficial effect of the corresponding solution in the corresponding method provided above. Details are not described herein again.

### BRIEF DESCRIPTION OF DRAWINGS

FIG. 1 is a diagram of an architecture of a communication system according to an embodiment of this application;
FIG. 2a and FIG. 2b are diagrams of 5G architectures corresponding to the communication system shown in FIG. 1;
FIG. 3 is a diagram of a media service transmission process;
FIG. 4-1 and FIG. 4-2 are diagrams of transmission when a frame rate of a service changes;
FIG. 5 is a schematic flowchart of an adaptive data flow transmission method according to an embodiment of this application;
FIG. 6-1 is a diagram of calculating a frame rate according to an embodiment of this application;
FIG. 6-2 is another diagram of calculating a frame rate according to an embodiment of this application;
FIG. 7 is a schematic flowchart of another adaptive data flow transmission method according to an embodiment of this application;
FIG. 8 is a schematic flowchart of another adaptive data flow transmission method according to an embodiment of this application;
FIG. 9 is a schematic flowchart of configuring service configuration information according to an embodiment of this application;
FIG. 10 is a specific schematic flowchart of an adaptive data flow transmission method according to an embodiment of this application;
FIG. 11 is a specific schematic flowchart of another adaptive data flow transmission method according to an embodiment of this application;
FIG. 12 is a diagram of a structure of a communication apparatus according to an embodiment of this application;
FIG. 13 is a diagram of a structure of a communication device according to an embodiment of this application; and
FIG. 14 is a diagram of a structure of a chip system according to an embodiment of this application.

### DESCRIPTION OF EMBODIMENTS

The following describes technical solutions in embodiments of this application with reference to the accompanying drawings in embodiments of this application.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In embodiments of this application, words such as "example" or "for example" is used to give an example, an illustration, or a description. Any embodiment or design solution described as "example" or "for example" in embodiments of this application should not be explained as being more preferred or having more advantages than another embodiment or design solution. Exactly, use of the terms such as "example" or "for example" is intended to present a related concept in a specific manner for ease of understanding.

It should be understood that in this application, "at least one (item)" means one or more. "A plurality of" means two or more than two. "At least two (items) "means two, three, or more than three. "And/or" is used to describe an association relationship between associated objects, and indicates that three relationships may exist. For example, "A and/or B" may represent three cases: Only A exists, only B exists, and both A and B exist, where A and B may be singular or plural. A character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural. Both "when ..." and "if" mean that corresponding processing is performed in an objective case, are not intended to limit time, do not require a determining action during implementation, and do not mean that there is another limitation.

System architectures and service scenarios described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges. In embodiments of this application, examples in which the provided methods are applied to an NR system or a 5th generation mobile communication technology (5th generation mobile networks or 5th generation wireless systems, 5th-Generation, 5G) network are used for description.
(1) A service may include one or more data flows. The data flow is a string of consecutive data packet sequences with a same source address and a same destination address.
(2) QoS flows are data flows within a protocol data unit (protocol Data Unit, PDU) session (session) that have a same QoS requirement, which may also be understood as a plurality of internet protocol (Internet Protocol, IP) flows that have a same QoS requirement or a group of data packets of another type that have a same QoS requirement. A non-access stratum (Non-Access Stratum, NAS) is mainly responsible for a mapping relationship between an IP flow or a data packet of another type and a QoS flow. A user plane function (User Plane Function, UPF) network element in a core network generates a downlink QoS flow, and a terminal generates an uplink QoS flow. An access stratum (Access Stratum, AS) is mainly responsible for a mapping relationship between a QoS flow and a data radio bearer (data radio bearer, DRB). A network side (for example, a base station) configures the mapping relationship between the QoS flow and the DRB, and provides, in an air-interface DRB, a QoS service for a QoS flow.
(3) A PDU session may be understood as a link that provides a PDU link service between a terminal and a data network (data network, DN).

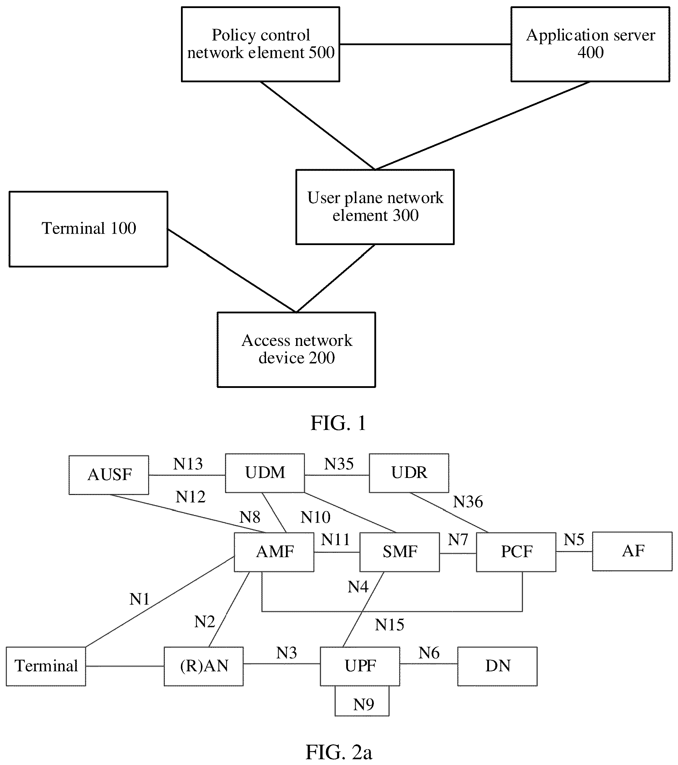

FIG. 1 shows a structure of a communication system according to an embodiment of this application. The system includes a terminal 100, an access network device 200, a user plane network element 300, and an application server 400.

One or more services are deployed on the application server 400, and the terminal 100 may access, through the access network device 200 and the user plane network element 300, the services deployed on the application server 400. Certainly, the terminal 100 may also receive a data flow that is of a service and that is sent by the application server 400. For example, various services such as a session service and a multimedia service may be deployed on the application server 400.

The access network device 200 is a network element in an access network. The user plane network element 300 is a network element in a core network.

For example, the user plane network element 300 is configured to determine a frame rate of the data flow of the service based on the received data flow that is of the service and that is sent by the application server 400 to the terminal 100. Then, the user plane network element 300 may forward the data flow of the service to the access network device 200 based on the frame rate of the data flow of the service by using a QoS profile that adapts to the frame rate; or the user plane network element 300 may send the frame rate of the data flow of the service, so that a network element that receives the frame rate of the data flow of the service determines a QoS profile that adapts to the frame rate of the data flow.

Optionally, the user plane network element 300 is further configured to feed back the frame rate of the data flow to the access network device 200, so that the access network device 200 forwards the data flow of the service to the terminal based on the frame rate of the data flow of the service by using the QoS profile that adapts to the frame rate.

Optionally, the communication system shown in FIG. 1 may further include a policy control network element 500.

The policy control network element 500 is configured to generate QoS profiles corresponding to different frame rates, and then send, to the access network device 200 and the user plane network element 300, the QoS profiles corresponding to the different frame rates, so that the access network device 200 and the user plane network element 300 select, based on the QoS profiles corresponding to the different frame rates, the QoS profile that adapts to the frame rate, to transmit the data flow of the service. Alternatively, the policy control network element 500 is configured to: obtain the frame rate that is of the data flow of the service and that is determined by the user plane network element 300; generate, based on the frame rate of the data flow of the service, the QoS profile that adapts to the frame rate; and provide the QoS profile for the access network device 200 and the user plane network element 300.

Optionally, the policy control network element 500 may send, to the access network device 200 and the user plane network element 300 through a session management network element, the QoS profiles corresponding to the different frame rates or the QoS profile that adapts to the frame rate.

In embodiments of this application, there is a data transmission channel, namely, a PDU session, between the terminal 100 and a data network. The terminal 100 may send an uplink data packet to the application server 400 in the data network through the PDU session, or may receive a downlink data packet from the application server 400 through the PDU session. The terminal 100 may establish one or more PDU sessions with a 5G system, and one or more QoS flows may be established in each PDU session. Each QoS flow is identified by one QoS flow identifier (QoS Flow Identifier, QFI), and the QFI uniquely identifies the QoS flow in a session. Each QoS flow corresponds to one QoS profile (QoS profile), and the QoS profile may generally refer to one or more (QoS) parameters in a QoS parameter set. The one or more parameters in the QoS parameter set may include: a guaranteed flow bit rate (GFBR), a packet delay budget (PDB) (including a core network packet delay budget), and a packet error rate (PER).

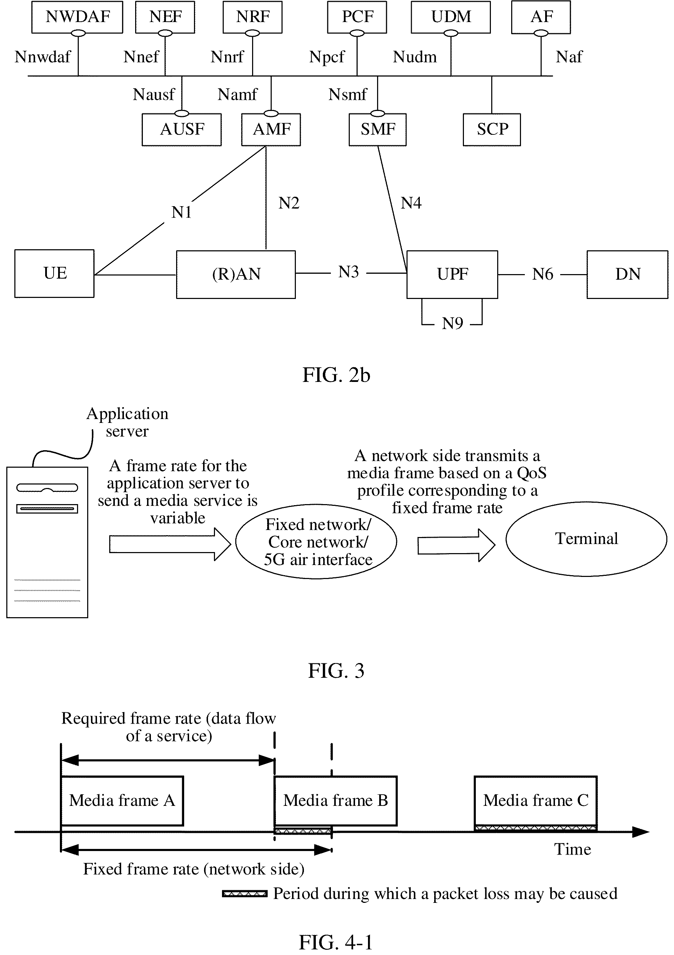

The communication system shown in FIG. 1 may be applied to a 5th generation (5th generation, 5G) network architecture shown in FIG. 2a or FIG. 2b, and certainly, may also be applied to a future network architecture, for example, a 6th generation (6th generation, 6G) network architecture. This is not limited in this application.

For example, the communication system shown in FIG. 1 is applied to a 5G network architecture. FIG. 2a is a diagram of a 5G network architecture based on a point-to-point interface. A network element or an entity corresponding to the user plane network element 300 in FIG. 1 may be a user plane function (user plane function, UPF) network element in the 5G network architecture shown in FIG. 2a. A network element or an entity corresponding to the access network device 200 in FIG. 1 may be a radio access network (radio access network, RAN) device in the 5G network architecture shown in FIG. 2a. A network element or an entity corresponding to the session management network element may be a session management function (session management function, SMF) network element in the 5G network architecture shown in FIG. 2a. A network element or an entity corresponding to the policy control network element 500 in FIG. 1 may be a policy control function (policy control function, PCF) network element in the 5G network architecture shown in FIG. 2a. A network element or an entity corresponding to the application server in FIG. 1 may be an application function (Application Function, AF) network element in the 5G network architecture shown in FIG. 2a.

The 5G network architecture shown in FIG. 2a may include three parts: a terminal part, a data network (data network, DN) part, and an operator network part.

The following briefly describes functions of some network elements in the architecture.

The operator network may include one or more of the following network elements: an authentication server function (Authentication Server Function, AUSF) network element, a network exposure function (network exposure function, NEF) network element, unified data management (unified data management, UDM), a unified data repository (Unified Data Repository, UDR), a network repository function (Network Repository Function, NRF) network element, an access and mobility management function (Access and Mobility Management Function, AMF) network element, and the like. In the operator network, a part other than a radio access network part may be referred to as a core network part.

The following describes functions of the network elements.

The AMF network element mainly performs functions such as mobility management and access authentication/authorization. In addition, the AMF network element is further responsible for transmitting user policies between a terminal and the PCF network element.

The SMF network element mainly performs functions such as session management, execution of control policies delivered by the PCF network element, selection of the UPF network element, and allocation of an internet protocol (internet protocol, IP) address of a terminal.

The UPF network element, serving as an interface to the data network, implements functions such as user-plane data forwarding, session/flow-level charging statistics, and bandwidth throttling.

The UDM network element is mainly responsible for functions such as subscription data management and user access authorization.

The UDR is mainly responsible for functions of storing and accessing type data such as subscription data, policy data, application data, and the like.

The NEF network element is mainly configured to support exposure of capabilities and events.

The AF network element mainly transfers requirements of an application side on a network side, for example, quality of service (Quality of Service, QoS) requirements or user status event subscription.

The AF network element may be a third-party functional entity, or may be an operator-deployed application service, for example, an IP multimedia subsystem (IP Multimedia Subsystem, IMS) voice call service. The AF network element may also be referred to as an application server.

The PCF network element is mainly responsible for policy control functions such as session/service data flow level charging, QoS bandwidth guarantee, mobility management, and UE policy decision.

The NRF network element may be configured to provide a network element discovery function, and provide, based on requests of other network elements, network element information corresponding to a network element type. The NRF network element further provides network element management services, for example, network element registration, update, and deregistration, and network element status subscription and push.

The AUSF network element is mainly responsible for performing authentication on users, to determine whether to allow users or devices to access a network.

The DN is a network located outside the operator network. The operator network may access a plurality of DNs, and a plurality of services may be deployed on the DN, to provide services such as data and/or voice for the terminal device. For example, the DN is a private network of a smart factory, a sensor mounted in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 2a, the terminal accesses the network through a (R)AN device, and the terminal communicates with the AMF network element through an N1 interface (N1 for short). The SMF network element communicates with one or more UPF network elements through an N4 interface (N4 for short). The UPF network element communicates with the DN through an N6 interface (N6 for short). The (R)AN device communicates with the AMF network element through an N2 interface (N2 for short). The (R)AN device communicates with the UPF network element through an N3 interface (N3 for short).

Control plane network elements may also interact with each other through service-based interfaces. For example, as shown in FIG. 2b, the AMF network element, the SMF network element, the UDM network element, and the PCF network element interact with each other through service-based interfaces. For example, a service-based interface exhibited by the AMF network element may be Namf. A service-based interface exhibited by the SMF network element may be Nsmf. A service-based interface exhibited by the UDM network element may be Nudm. A service-based interface exhibited by the PCF network element may be Npcf. A service-based interface exhibited by the NSSF network element may be Nnssf. A service-based interface exhibited by the NEF network element may be Nnef. A service-based interface exhibited by the AF network element may be Naf. A service-based interface exhibited by the NRF network element may be Nnrf. A service-based interface exhibited by the BSF network element may be Nbsf. A service-based interface exhibited by the CHF network element may be Nchf (not shown in FIG. 2b). A service-based interface exhibited by the NWDAF network element may be Nnwdaf. A service-based interface exhibited by the BSF network element may be Nbsf. A service-based interface exhibited by the NRF network element may be Nnrf. It should be understood that, for related descriptions of names of various service-based interfaces, refer to a 5G system architecture (5G system architecture) diagram in conventional technologies. Details are not described herein.

It should be noted that, FIG. 2a and FIG. 2b merely shows one UPF network element and one SMF network element as examples. Certainly, a plurality of UPF network elements and a plurality of SMF network elements may be included. For example, an SMF network element 1 and an SMF network element 2 are included. This is not specifically limited in embodiments of this application.

It should be noted that the (R)AN device, the AMF network element, the SMF network element, the UDM network element, the UPF network element, the PCF network element, and the like in FIG. 2a and FIG. 2b are merely names, and the names do not constitute any limitation on the devices. In the 5G network and another future network, network elements or entities corresponding to the (R)AN device, the AMF network element, the SMF network element, the UDM network element, the UPF network element, and the PCF network element may alternatively have other names. This is not specifically limited in embodiments of this application. For example, the UDM network element may alternatively be replaced with a home subscriber server (home subscriber server, HSS), a user subscription database (user subscription database, USD), a database entity, or the like. This is uniformly described herein, and details are not described subsequently.

In FIG. 2a, Nausf, Nnef, Npcf, Nudm, Naf, Namf, Nsmf, N1, N2, N3, N4, and N6 are interface sequence numbers. For meanings of the interface sequence numbers, refer to meanings defined in the 3GPP standard protocol. This is not limited herein. For example, it is assumed that the communication system shown in FIG. 1 is applied to a 5G network architecture. FIG. 2b is a diagram of a 5G network architecture based on service-based interfaces. A network element or an entity corresponding to the user plane network element in FIG. 1 may be a UPF network element in the 5G network architecture shown in FIG. 2b, and a network element or an entity corresponding to the access network element in FIG. 1 may be a RAN device in the 5G network architecture shown in FIG. 2b. A network element or an entity corresponding to the session management network element in FIG. 1 may be an SMF network element in the 5G network architecture shown in FIG. 2b.

For descriptions of functions of the network elements in FIG. 2b, refer to the descriptions of the functions of the corresponding network elements in FIG. 2a. Details are not described again. A main difference between FIG. 2a and FIG. 2b lies in that interfaces between the network elements in FIG. 2a are point-to-point interfaces rather than service-based interfaces. In the architecture shown in FIG. 2a, names and functions of interfaces between network elements are as follows:
(1) N7 represents an interface between the PCF and the SMF, and is configured to deliver control policies on a protocol data unit (protocol data unit, PDU) session basis and on a service data flow basis.
(2) N15 represents an interface between the PCF and the AMF, and is configured to deliver UE policies and access control related policies.
(3) N5 represents an interface between the AF and the PCF, and is configured to deliver application service requests and report network events.
(4) N4 represents an interface between the SMF and the UPF, and is configured to transfer information between a control plane and a user plane, including delivery of forwarding rules, QoS control rules, traffic statistics rules, and the like from the control plane to the user plane, and reporting of user plane information.
(5) N11 represents an interface between the SMF and the AMF, and is configured to: transfer PDU session tunnel information between the RAN and the UPF, transfer control messages to be sent to the UE, transfer radio resource control information to be sent to the RAN, and the like.
(6) N2 represents an interface between the AMF and the RAN, and is configured to transfer radio bearer control information and the like from a core network side to the RAN.
(7) N1 represents an interface between the AMF and the UE, is access-irrelevant, and is configured to transfer the QoS control rules and the like to the UE.
(8) N8 represents an interface between the AMF and the UDM, and is used by the AMF to obtain, from the UDM, subscription data and authentication data related to access and mobility management, used by the AMF to register current mobility management related information of the UE with the UDM, and the like.
(9) N10 represents an interface between the SMF and the UDM, and is used by the SMF to obtain, from the UDM, subscription data related to session management, used by the SMF to register current session related information of the UE with the UDM, and the like.
(10) N35 represents an interface between the UDM and the UDR, and is used by the UDM to obtain user subscription data information from the UDR.
(11) N36 represents an interface between the PCF and the UDR, and is used by the PCF to obtain policy related subscription data and application data related information from the UDR.
(12) N12 represents an interface between the AMF and the AUSF, and is used by the AMF to initiate an authentication procedure to the AUSF, where an SUCI may be carried as a subscription identifier.
(13) N13 represents an interface between the UDM and the AUSF, and is used by the AUSF to obtain a user authentication vector from the UDM, to perform an authentication procedure.

It may be understood that the foregoing network elements or functions may be network elements in a hardware device, software functions running on dedicated hardware, or virtualized functions instantiated on a platform (for example, a cloud platform).

Optionally, the network element or function may be implemented by one device, may be jointly implemented by a plurality of devices, or may be a functional module in one device. This is not specifically limited in embodiments of this application. The session management network element, the policy control network element, the user plane network element, and the access network device in this application may be respectively the SMF, the PCF, the UPF, and the RAN in FIG. 2a or FIG. 2b, or may be network elements having the functions of the SMF, the PCF, the UPF, and the RAN in future communication, for example, a 6G network. This is not limited in this application. For ease of description, in this application, descriptions are provided by using an example in which the session management network element, the policy control network element, the user plane network element, and the access network device are respectively the SMF, the PCF, the UPF, and the RAN.

A terminal is a device that allows a user to access a network service. In the 3GPP standard, an interface between a terminal and a network is a radio interface.

The terminal (terminal) may include various handheld devices, vehicle-mounted devices, wearable devices, and computing devices that have a wireless communication function, or other processing devices connected to a wireless modem, and may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the devices mentioned above are collectively referred to as terminals.

It should be understood that the terminal in embodiments of this application may alternatively be a terminal device in Internet of things or a terminal in a plurality of vertical industry application fields such as a port, an intelligent factory, railway transportation, logistics, an uncrewed aerial vehicle, and an autonomous driving vehicle, for example, a mobile robot (mobile robot), an automated guided vehicle (automated guided vehicle, AGV), an autonomous driving vehicle, a control device and a sensor on a train, or a control device and a sensor (sensor) deployed in a factory.

For example, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generic wearable intelligent devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms. The terminal may alternatively be a sensor device used in a factory.

The access network device is a device having a function of providing network access, for example, a radio access network (radio access network, RAN) or a base station. The access network device may specifically include the base station (base station, BS) (for example, a RAN base station), or include the base station, a radio resource management device configured to control the base station, and the like. The network device may further include a relay station (relay device), an access point, a base station in a future 5G network, a base station in a future evolved PLMN network, an NR base station, or the like. The network device may be a wearable device or a vehicle-mounted device. The access network device may alternatively be a communication chip having a communication module.

For example, the access network device includes but is not limited to: a next generation NodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, C-RAN) system, a base station controller (base station controller, BSC), a home NodeB (for example, a home evolved NodeB or a home NodeB, HNB), a baseband unit (baseband unit, BBU), a transmission reception point (transmission and reception point, TRP), a transmission point (transmission point, TP), a mobile switching center, a base transceiver station (base transceiver station, BTS) in a global system for mobile communication (global system for mobile communication, GSM) or code division multiple access (code division multiple access, CDMA) network, a node base station (node base station, NB) in wideband code division multiple access (wideband code division multiple access, WCDMA), an evolved (evolved) NB (eNB or eNodeB) in LTE, a base station device in a future 5G network, an access network device in a future evolved PLMN network, a wearable device, or a vehicle-mounted device.

When the UPF network element receives a downlink data packet, the UPF network element encapsulates downlink data packets (packets) that have a same reliability requirement into a same QoS flow (QoS flow) through a filter (filter) based on a packet detection rule (Packet Detection Rule, PDR) pre-configured by the SMF network element. A plurality of QoS flows may exist in a same PDU session (PDU session), but each QoS flow has an independent and unique QoS flow identifier (QoS flow Identifier, QFI), and each QoS flow is associated with one QoS profile. The network side uses, based on parameters in the QoS profile, a same QoS guarantee, for example, a delay, a forwarding priority, and a packet loss rate, for data packets belonging to the same QoS flow.

For a real-time multimedia service (for example, XR of cloud rendering), downlink data of the real-time multimedia service is real-time audio and video streams, and generally has the following features.
1. Because one media frame has a large amount of data, the media frame is usually decomposed into several data packets after being encoded, and transmitted over a network. For example, one media frame may be decomposed into 150 data packets, and these data packets are associated with each other to form a whole (referred to as a protocol data unit set). A decoding operation on the media frame can be successfully completed only when all the data packets are obtained at the same time.
2. The protocol data unit set of the media frame is transmitted by using a periodic burst, and a time interval between two frames is (1000/frame rate) ms. The time interval is a media frame periodicity (where the media frame periodicity is also referred to as an interframe interval in embodiments of this application). For example, if the frame rate is 60 fps, the interframe interval is 16.7 ms. A maximum burst rate for periodic burst transmission is usually configured by a server side. For example, the maximum burst rate is set to four times an average rate.
3. To ensure an MTP (Motion To Photon) delay requirement of XR, a protocol data unit set of one media frame needs to be transmitted to a terminal in specified time, for example, 9 ms, so that the terminal further performs decoding and presentation.

To ensure user experience, there is also a requirement on a packet loss rate of a protocol data unit set of one media frame. For example, reliability of one protocol data unit set is 99.9%, in other words, a data packet loss probability is required to be less than 0.1%.

FIG. 3 shows a transmission process of downlink multimedia data in a 5G network. When a terminal establishes a service connection to a media server (Server), the 5G network configures a corresponding QoS flow for service data of the terminal based on user subscription information of the terminal. Parameters of the QoS flow are at a granularity of data packets, and include a data packet delay budget, a data packet error rate, and the like. All the parameters are fixed values. Therefore, after downlink data (for example, a video stream) on a server side arrives at a network side, the network side transmits the service data at the granularity of data packets based on QoS parameters configured during session establishment. In the process of transmitting the service data on the network side, network elements (such as a UPF network element and a RAN) always schedule network resources based on the fixed QoS parameters to transmit a downlink data packet of a service, and does not sense a service feature (for example, a frame rate). Therefore, when the frame rate of the service data changes, the network side still transmits a downlink data packet of a media frame by using a fixed QoS profile.

A media frame rate of the service may need to be adjusted in some cases to improve QoE. Examples are as follows: (1) When the service is in a dynamic scenario, a high frame rate is required to prevent image jitter, and when the service is in a static scenario, a low frame rate may be used. (2) For online games, when network congestion occurs, the server may reduce the frame rate to ensure normal running of the service. (3) A quantity of frames is positively correlated with device power consumption, and when a user is in a standby state or an inactive state, the frame rate needs to be reduced to reduce the device power consumption. In an existing network, data of a media service is transmitted by using a fixed QoS profile, and a change of features such as a frame rate of the service is not considered. When the frame rate of the service changes, a QoS requirement changes accordingly. In this case, if data transmission is performed by using the fixed QoS profile, a change of a service requirement cannot be flexibly adapted, affecting service experience. A scenario in which the frame rate of the service changes is used as an example. Using a fixed transmission solution in the existing network has the following disadvantages.

As shown in FIG. 4-1, when a frame rate N' of a service is greater than a frame rate N corresponding to a QoS profile of a network, a rate requirement of a data flow corresponding to the service is greater than a burst rate of the QoS profile. In this case, network transmission resources cannot satisfy a transmission rate of the data flow. This may cause network congestion and a data packet loss. In a time period shown in FIG. 4-1, a packet loss may occur, causing video freeze and jitter, and affecting user experience.

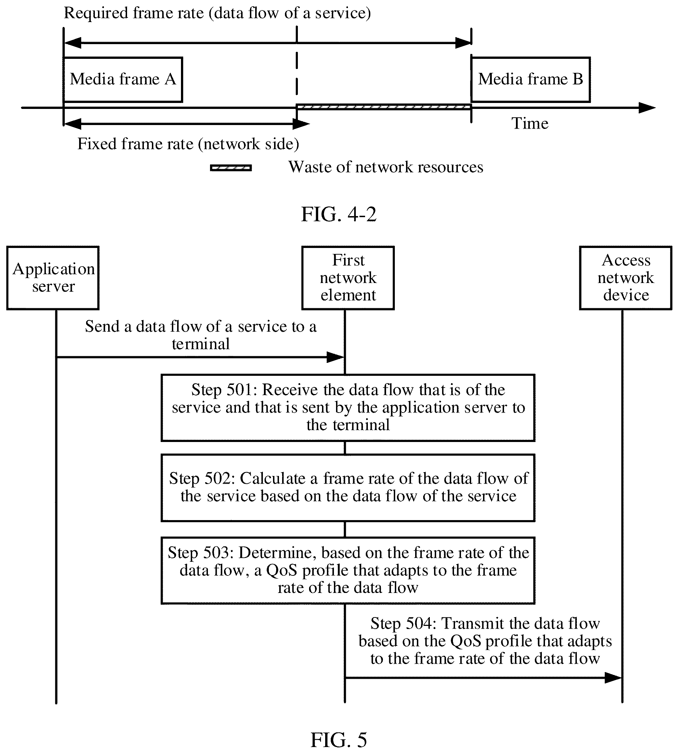

As shown in FIG. 4-2, when a frame rate N' of a service is less than a frame rate N corresponding to a QoS profile of a network, a rate requirement of a data flow corresponding to the service is less than a burst rate of the QoS profile. In this case, transmission resources configured in the network are excessive. This causes a reduction in network resource utilization. In a time period shown in FIG. 4-2, the network is in an idle state, causing a network resource waste.

In view of this, embodiments of this application provide an adaptive data flow transmission method, to adaptively select, based on a frame rate of a data flow of a service, a QoS profile that adapts to the frame rate, to transmit the data flow of the service, so as to avoid a packet loss or a network resource waste.

In embodiments of this application, a specific structure of an execution body of the adaptive data flow transmission method is not specifically limited, provided that a program that records code of the adaptive data flow transmission method in embodiments of this application can be run, to perform communication according to the adaptive data flow transmission method in embodiments of this application. For example, the adaptive data flow transmission method provided in embodiments of this application may be performed by a functional module that can invoke a program and execute the program in a first network element, or may be performed by a communication apparatus used in the first network element, for example, a chip, a chip system, or an integrated circuit. The chip, the chip system, or the integrated circuit may be disposed inside the first network element, or may be independent of the first network element. This is not limited in embodiments of this application.

FIG. 5 shows an adaptive data flow transmission method according to an embodiment of this application. The method includes the following steps.

Step 501: A first network element obtains a data flow that is of a service and that is sent to a terminal.

For example, the data flow includes one or more protocol data unit sets (PDU sets). Each protocol data unit set includes one or more downlink data packets. In other words, an application server may periodically send one or more protocol data unit sets to the first network element.

For example, each downlink data packet includes an identifier of a data flow to which the downlink data packet belongs. In this way, a user plane network element determines the data flow to which the downlink data packet belongs.

For example, the first network element in this embodiment of this application may be the user plane network element 300 shown in FIG. 1. The user plane network element 300 may receive, through a network, the data flow that is of the service and that is sent by the application server to the terminal. For example, the first network element may alternatively be an access network device.

For example, when using an application (Application, APP) on the terminal, a user may tap the APP, for example, may access a video, a picture, a text, or the like on the APP. In a downlink direction, if an application server on which the APP is deployed generates a downlink data flow, the application server sends a downlink data packet of the data flow to the user plane network element, so that the user plane network element forwards the downlink data packet to the terminal.

For example, the downlink data packet may further include information about a destination address, so that the user plane network element determines a specific terminal to which the downlink data packet is to be forwarded. For example, the information about the destination address may be identification information of the terminal.

For example, after receiving the data flow sent by the application server to the terminal, the user plane network element may perform packet detection on the downlink data packet in the data flow sent by the application server to the terminal.

For example, the user plane network element may perform, based on first policy information, packet detection on the downlink data packet sent by the application server to the terminal. For example, the first policy information includes a PDR.

For example, the first policy information may be obtained by the user plane network element from a PCF network element or from a session management network element.

For example, the downlink data packet may be an IP data packet.

Step 502: The first network element determines a frame rate of the data flow.

For example, the first network element may determine the frame rate of the data flow based on feature information of the data flow.

For example, the feature information of the data flow is at least used to determine time at which a first downlink data packet/each downlink data packet in each protocol data unit set of the data flow arrives at the first network element. Alternatively, the feature information of the data flow is used to determine a time interval between downlink data packets that are in two adjacent protocol data unit sets of the data flow and that first arrive at the first network element.

It may be understood that a downlink data packet that first arrives at the first network element refers to a downlink data packet that first arrives at the first network element in a protocol data unit set, namely, a downlink data packet that is first received by the first network element.

Optionally, the feature information of the data flow may further be a sequence number of the PDU set (protocol data unit set) including the downlink data packet, a size of the PDU set, or the like. For example, the feature information is used to determine a time interval between first packets p1 and p2 that are in two adjacent PDU sets (denoted as a set 1 and a set 2) and that arrive at the user plane network element (where p1 is a downlink data packet that is in the set 1 and that first arrives at the user plane network element, and p2 is a downlink data packet that is in the set 2 and that first arrives at the user plane network element).

For example, the first network element may perform adaptive frame rate adjustment on a data flow of any service. Alternatively, the first network element may perform adaptive frame rate adjustment on a data flow of a specified service.

For example, if the first network element determines that the data flow is the data flow of the specified service, the first network element calculates the frame rate of the data flow. In other words, if the data flow is not the data flow of the specified service, the first network element may omit subsequent steps 502 to 504. For example, the specified service may be a media service, a telemedicine service, or a service like an intelligent industry service.

For example, it is assumed that the first network element is configured to perform adaptive frame rate adjustment on a data flow of the media service, and it is assumed that the first network element determines that a data flow of a voice service rather than the data flow of the media service is received. In this case, the first network element may not perform adaptive frame rate adjustment on the data flow of the voice service, that is, does not calculate a frame rate of the data flow of the voice service. It is assumed that the media service includes a video service and an audio service. If the first network element is configured to perform adaptive frame rate adjustment on a data flow of the video service, and the first network element determines that the data flow of the video service is received, the first network element may perform adaptive frame rate adjustment on the data flow of the video service, that is, calculate a frame rate of the data flow of the video service, and select, based on the calculated frame rate of the data flow of the video service, a QoS profile that adapts to the calculated frame rate, to transmit the data flow of the video service.

For example, the first network element may periodically calculate the frame rate of the data flow. For example, the first network element may calculate the frame rate of the data flow once every 1 minute or 30 seconds.

In an example, the first network element may periodically calculate the frame rate of the data flow based on a frame rate detection periodicity.

For example, the frame rate detection periodicity may be pre-configured, or may be agreed on in a protocol or determined by the first network element, or the frame rate detection periodicity may be configured by another network element (for example, an AF network element/an SMF network element/the PCF network element) for the first network element. For example, the AF network element may configure the frame rate detection periodicity for the SMF network element/PCF network element, and then the SMF network element/PCF network element configures the frame rate detection periodicity for the first network element.

For another example, the first network element may calculate the frame rate of the data flow based on triggering of another network element. For example, the access network device or the PCF network element triggers the first network element to determine the frame rate of the data flow.

In this embodiment of this application, the frame rate of the data flow determined by the first network element may also be considered as a frame rate of the data flow detected by the first network element.

Step 503: The first network element determines, based on the frame rate of the data flow, a QoS profile that adapts to the frame rate of the data flow.

For example, if the first network element determines, based on the frame rate of the data flow, that the frame rate of the data flow is different from a first frame rate, the first network element determines, based on the frame rate of the data flow, the QoS profile that adapts to the frame rate of the data flow. The first frame rate is a frame rate for current transmission of the data flow of the service, to be specific, the first frame rate may be a frame rate associated with a QoS profile used by the user plane network element for current transmission of the data flow.

For example, the first network element starts to transmit the data flow of the service by using a QoS profile 1, and a frame rate associated with the QoS profile 1 is 30 fps. However, a frame rate actually determined by the first network element is 60 fps. That is, a rate requirement of the data flow corresponding to the service is greater than a burst rate of the QoS profile. In this case, network transmission resources cannot satisfy a transmission rate of the data flow. This may cause network congestion and a data packet loss. Therefore, the first network element may select a QoS profile 2 that adapts to the frame rate 60 fps, to transmit the data flow.

In an example, the QoS profile includes parameters of the QoS flow. The parameters of the QoS flow are at a granularity of data packets, and include a data packet delay budget, a data packet error rate, and the like. The QoS profile may further include one or more of a protocol data unit set error rate (PDU Set Error Rate, PSER) and a protocol data unit set delay (PDU Set Delay Budget, PSDB).

Step 504: The first network element transmits the data flow based on the QoS profile that adapts to the frame rate of the data flow.

For example, the first network element is the user plane network element 300. The first network element may transmit the data flow to the access network device based on the QoS profile that adapts to the frame rate of the data flow.

In an example, the QoS profile that adapts to the frame rate of the data flow is the QoS profile 2. In this case, the user plane network element 300 may schedule a network resource based on the QoS profile 2 to transmit the data flow to the access network device.

In the foregoing solution, the first network element determines the frame rate of the data flow of the service, and selects, based on the determined frame rate of the data flow of the service, the QoS profile that adapts to the frame rate of the data flow of the service, to transmit the data flow of the service. In this way, when the frame rate of the data flow is different from the frame rate corresponding to the QoS profile for current transmission of the data flow, an appropriate QoS profile is selected promptly to transmit the data flow. This solution can reduce a network resource waste or a packet loss of media frame data, and improve network resource utilization and user experience.

That the frame rate of the data flow is different from the frame rate corresponding to the QoS profile for current transmission of the data flow may mean that the frame rate of the data flow is less than the frame rate corresponding to the QoS profile for current transmission of the data flow, that is, the rate requirement of the data flow corresponding to the service is less than the burst rate of the QoS profile, or that the frame rate of the data flow is greater than the frame rate corresponding to the QoS profile for current transmission of the data flow. It may be understood that, when a difference between the frame rate of the data flow and the frame rate corresponding to the QoS profile for current transmission of the data flow is greater than or equal to a second abnormality threshold, it is determined that the frame rate of the data flow is different from the frame rate corresponding to the QoS profile for current transmission of the data flow.

For example, the second abnormality threshold is 10. If the frame rate corresponding to the QoS profile for current transmission of the data flow is 30 fps, and the frame rate determined by the first network element is 45 fps, it indicates that the frame rate of the data flow is different from the frame rate corresponding to the QoS profile for current transmission of the data flow. If the frame rate determined by the first network element is 32 fps, it may be considered that the frame rate of the data flow is the same as the frame rate corresponding to the QoS profile for current transmission of the data flow.

In an example, step 502 in this embodiment of this application may be implemented in the following Manner 1 or Manner 2.

Manner (1): The frame rate of the data flow is determined by an average of n time intervals.

Because quantities of downlink data packets in different protocol data unit sets may be the same or different, to ensure accuracy of the frame rate of the data flow, for example, the time interval may be a time difference between downlink data packets that are in two adjacent protocol data unit sets of the data flow and that first arrive at the first network element. Herein, n is an integer greater than or equal to 1.

Certainly, optionally, the time interval may alternatively be a time difference between downlink data packets that are in two adjacent protocol data unit sets of the data flow and that last arrive at the first network element. For example, in an example, if the quantities of downlink data packets in the different protocol data unit sets are the same, the frame rate of the data flow may be determined based on the time difference between the downlink data packets that are in the two adjacent protocol data unit sets of the data flow and that last arrive at the first network element.

For example, the frame rate of the data flow is determined by an average of n time intervals that in n counts in a period of time before fourth time. For example, the fourth time may be current time. In other words, the frame rate of the data flow is determined by an average of n time intervals counted in a past period of time.

For example, the protocol data unit set may be considered as a burst flow periodically sent by the application server to the first network element.

For example, the two adjacent protocol data unit sets of the data flow are respectively a protocol data unit set 1 and a protocol data unit set 2. Time at which a downlink data packet P1 that is in the protocol data unit set 1 and that first arrives at the user plane network element is T1. Time at which a downlink data packet P2 that is in the protocol data unit set 2 and that first arrives at the user plane network element is T2. In this case, a time interval between the protocol data unit set 1 and the protocol data unit set 2 is T1-T2.

For example, the frame rate of the data flow is a frame rate, in one or more frame rates, that is closest to the average of the n time intervals. In other words, the frame rate of the data flow is a frame rate, in the one or more frame rates, that has a smallest difference with the average of the n time intervals. When there are at least two frame rates, in the one or more frame rates, that have the smallest difference with the average of the n time intervals, the frame rate of the data flow may be any one of the at least two frame rates that have the smallest difference with the average of the n time intervals, or the frame rate of the data flow may be a frame rate greater than the average of the n time intervals or a frame rate less than the average of the n time intervals in the at least two frame rates.

For example, the first network element pre-configures or the first network element obtains, from the policy control network element, one or more frame rates for transmitting the data flow of the service. For example, the one or more frame rates may be 30 fps, 45 fps, 60 fps, and 90 fps. If 60 fps is a frame rate closest to the average of the n time intervals, it may be determined that the frame rate of the data flow is 60 fps.

For example, step 502 in this embodiment of this application may be implemented in the following manner: If the first network element determines that the frame rate of the data flow changes during a period prior to a first time point, and the frame rate of the data flow remains unchanged during a period after the first time point (that is, the frame rate tends to be stable or the frame rate changes in a preset range), the first network element determines the frame rate of the data flow based on the n time intervals during the period after the first time point.

Specifically, an example in which the feature information of the data flow is a time interval between downlink data packets that are in two adjacent protocol data unit sets of the data flow and that first arrive at the first network element is used. The first network element determines, based on time intervals respectively in an m^{th} count and an (m-1)^{th} count and time intervals respectively in the (m-1)^{th} count and an (m-2)^{th} count, that the frame rate of the data flow changes. If the frame rate of the data flow remains unchanged in the period of time after the first time point (that is, the frame rate tends to be stable or the frame rate changes in the preset range), the frame rate of the data flow is determined based on the time interval in the m^{th} count and time intervals in n-1 counts in a period of time after the m^{th} count. The first time point corresponds to the time interval in the m^{th} count.

It is assumed that a frame rate count configured for the first network element is x. In this case, the first network element counts, once at an interval of a period of time, a time interval between downlink data packets that are in two received adjacent protocol data unit sets and that first arrive at the first network element. For example, the first network element counts time intervals in a time period 1, the quantity of counts is x, and end time of the time period 1 is the first time. The time interval in an m^{th} count is a time interval 0, the time interval in an (m-1)^{th} count is a time interval 1, the time interval in the (m-2)^{th} count is a time interval 2, a time interval in an (m-3)^{th} count is a time interval 3, ..., and a time interval in an (m-x)^{th} count is a time interval x. In this case, the first network element may determine, based on the time intervals in the m^{th} count to the (m-x)^{th} count, whether the frame rate of the data flow changes in the time period 1.

For example, if an absolute value of a deviation between two adjacent time intervals in at least one count is greater than or equal to a first abnormality threshold, it indicates that the frame rate changes.

For example, if the absolute value of the deviation between the time intervals in the at least one count is less than the first abnormality threshold, it indicates that the frame rate remains unchanged.

For example, if the first network element determines that an absolute value of a deviation between the time interval 0 and the time interval 1 is greater than or equal to the first abnormality threshold, it indicates that the frame rate changes. If the first network element determines that an absolute value of a deviation between the time interval 0 and the time interval 1 is less than the first abnormality threshold, it indicates that the frame rate remains unchanged. For another example, if the first network element determines that an absolute value of a deviation between the time interval 0 and the time interval 1 is greater than or equal to the first abnormality threshold, and an absolute value of a deviation between the time interval 1 and the time interval 2 is greater than or equal to the first abnormality threshold, it indicates that the frame rate changes. Otherwise, it indicates that the frame rate remains unchanged. Certainly, if a quantity of counts, in a plurality of counts, in which an absolute value of a deviation between two adjacent time intervals is greater than or equal to the first abnormality threshold is greater than a specified value, it is determined that the frame rate changes. For example, if the first network element counts time intervals for five times, and a quantity of counts, in the five time interval counts, in which an absolute value of a deviation between two adjacent time intervals is greater than or equal to the first abnormality threshold is 3, which is greater than or equal to the specified value, it is determined that the frame rate changes. If the first network element counts time intervals for five times, and a quantity of counts, in the five time interval counts, in which an absolute value of a deviation between two adjacent time intervals is greater than or equal to the first abnormality threshold is 3, which is less than the specified value, it is determined that the frame rate remains unchanged.

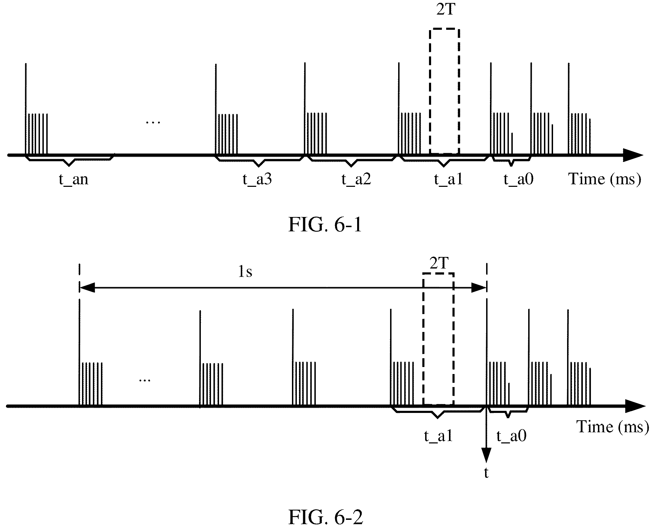

For example, as shown in FIG. 6-1, in a service execution process, the user plane network element counts a time interval t_a1 between two downlink data packets that are respectively in two current adjacent protocol data unit sets and that are first received, and calculates an absolute value of a deviation between t_a1 and a time interval t_a0, in a previous count, between two downlink data packets that are respectively in two adjacent protocol data unit sets and that are first received. For example, t_gap=|t_a1-t_a0|.

If t_gap is greater than the first abnormality threshold T (for example, X ms), and t_gap of subsequent n-1 consecutive count results is less than the first abnormality threshold T, it indicates that the frame rate remains unchanged, and the frame rate N_frame is set to a frame rate that is closest to 1/T_est in the one or more frame rates. For example, N_frame=1/T_est.

Herein, T_est is an average of time intervals (t_a1, t_a2, ..., and t_an) in previous n counts, T_est=aver(t_a1, t_a2, ..., t_an), and n is a positive integer greater than or equal to 1. When n=1, there is no need to count a time interval between subsequent protocol data unit sets, and N_frame=1/t_a0.

In an example, one or more frame rates are configured for the first network element. The one or more frame rates may be configured by the AF network element for the first network element, or may be preset in the first network element or agreed on in a protocol. This is not limited in embodiments of this application.

It should be noted that in embodiments of this application, duration of the period of time prior to the first time point may be the same as or different from duration of the period of time after the first time. This is not limited in embodiments of this application.

Manner (2): The frame rate of the data flow is determined by a quantity of protocol data unit sets that arrive at the first network element during a period .

For example, duration of the period of time may be 1 second. This is not limited in embodiments of this application.

For example, the frame rate of the data flow is a frame rate, in one or more frame rates, that is closest to the quantity of protocol data unit sets that arrive at the first network element in the period of time.

For example, one or more frame rates that are related to the service and that are stored in the first network element may be 30 fps, 45 fps, 60 fps, and 90 fps. If the first network element counts that a quantity of protocol data unit sets that arrive at the first network element in 1 second is 59, the first network element may determine that the frame rate of the data flow is 60 fps.

In another example, the feature information of the data flow is time at which a last downlink data packet in each protocol data unit set of the data flow arrives at the first network element.

Correspondingly, step 502 in this embodiment of this application may be implemented in the following manner: If the frame rate of the data flow changes during a period prior to a first time point, and the frame rate of the data flow remains unchanged during a period after the first time point, the first network element determines the frame rate of the data flow based on a quantity of protocol data unit sets received by the first network element during the period of time after the first time point.

For example, the first network element counts x times at the first time point and prior to the first time point, and counts x time intervals in total, for example, a time interval 0 (in an m^{th} count), a time interval 1 (in an (m-1)^{th} count), a time interval 2 (in an (m-2)^{th} count), ..., and a time interval x (in an (m-x)^{th} count). If the first network element determines, based on the time interval in the m^{th} count to the time interval in the (m-x)^{th} count, that the frame rate of the data flow changes, the first network element determines the frame rate of the data flow based on the quantity of protocol data unit sets that arrive at the first network element during the period of time after the first time point.

For example, as shown in FIG. 6-2, in a service execution process, the user plane network element counts a time interval t_a1 between two downlink data packets that are of the user plane network element and that are first in two current adjacent protocol data unit sets. The user plane network element calculates an absolute value of a deviation between t_a1 and a time interval t_a0 in a previous count, that is, t_gap=|t_a1-t_a0|. If t_gap is greater than or equal to a first abnormality threshold T (for example, X ms), and t_gap in consecutive n-1 count results is less than the first abnormality threshold T, the user plane network element starts to count, from a moment t, a quantity of protocol data unit sets received in 1 second, and records the quantity as N_burst. The user plane network element sets the frame rate N_frame to a frame rate xi, in the one or more frame rates, that is closest to N_burst, and N_frame=xi. Herein, n is a positive integer greater than 1, n is an integer greater than or equal to 1, and when n=1, there is no need to count a time interval between subsequent protocol data unit sets.

In a possible embodiment of this application, the method provided in this embodiment of this application may further include: The first network element sends the frame rate of the data flow.

For example, the first network element sends the frame rate of the data flow to a second network element. For example, the second network element may include one or more of the access network device, the policy control network element, or the session management network element.

In an example, the first network element is the user plane network element. The user plane network element may send the frame rate of the data flow of the service to the access network device through an N3 interface. For example, the user plane network element packs the frame rate of the data flow of the service into an empty GTP-U packet, or may include the frame rate of the data flow of the service in a GTP-U header of a downlink data packet, and then send the downlink data packet to the access network device through the N3 interface. In this way, when receiving the downlink data packet from the user plane network element, the access network device schedules and forwards the downlink data packet by using the updated QoS profile, to avoid a packet loss or transmission timeout caused by congestion of the downlink data packet.

In an example, the first network element is the user plane network element. The user plane network element may include the frame rate of the data flow in a second message and send the second message to the session management network element, and then the session management network element sends the frame rate of the data flow to the policy control network element. For example, the second message may indicate to request to update the QoS profile of the data flow of the service. In this way, the policy control network element updates the QoS profile of the data flow of the service promptly based on the frame rate of the data flow. Then, the policy control network element sends the updated QoS profile of the data flow of the service to the user plane network element and/or the access network device, so that the access network device and/or the user plane network element transmit/transmits the data flow of the service based on the updated QoS profile of the data flow of the service.

For another example, if the first network element determines that the frame rate of the data flow is different from the frame rate associated with the QoS profile configured for the data flow, the first network element sends the frame rate of the data flow to the access network device and/or the policy control network element. In this way, the access network device and/or the policy control network element update/updates the QoS profile of the data flow promptly based on the frame rate of the data flow.

In a possible implementation of this application, the first network element may further be configured with service configuration information, or the service configuration information is agreed on in a protocol. The service configuration information may be general service configuration information, that is, different services correspond to same service configuration information. Alternatively, the service configuration information may be service configuration information separately set for a service. For example, the service configuration information is applicable to a media service. This is not limited in embodiments of this application.

In a possible implementation of this application, before step 501, the method provided in this embodiment of this application may further include: The first network element receives a first message. For example, the first message includes service configuration information of the service. The service configuration information is used to determine to adjust the QoS profile of the data flow based on the frame rate of the data flow of the service.

In an example, the service configuration information includes one or more frame rates, a QoS requirement corresponding to each frame rate, and a frame rate detection related parameter. The frame rate detection related parameter includes at least one of the following: a frame rate detection periodicity, a frame rate abnormality threshold, and a frame rate count.

In an example, different frame rates correspond to different QoS requirements. For example, the QoS requirement corresponding to the frame rate includes but is not limited to one or more of the following information: a setting requirement of one or more QoS parameters such as a bit rate (bit rate), a bandwidth, a packet loss rate (Packet Error Rate, PER), and a packet delay budget (Packet Delay Budget, PDB). Specifically, data flows of different types of services have different requirements for QoS parameters such as a transmission bandwidth, a packet loss rate, and a delay. For example, conversational and streaming media services have high requirements for the delay and the bandwidth, but services such as WWW, Email, FTP (File Transfer Prot, FTP), and news services have low requirements for the delay. Optionally, the QoS requirement corresponding to the frame rate may further include one or more of a protocol data unit set error rate (PDU Set Error Rate, PSER) and a protocol data unit set delay (PDU Set Delay Budget, PSDB).

For example, the service configuration information further includes first indication information. The first indication information indicates to adaptively adjust the QoS profile of the service based on the service data flow corresponding to the service, or the first indication information indicates that the QoS profile of the service does not need to be adaptively adjusted based on the service data flow corresponding to the service.

In an example, the first message may be sent by the session management network element to the first network element.

For example, if the session management network element determines that the service configuration information of the service is updated, the session management network element sends the first message to the first network element. Alternatively, the first network element sends a request message to the session management network element, to request the session management network element to provide the service configuration information of the service, and then the session management network element sends the first message to the first network element based on the request message.

In a possible implementation of this application, step 503 may be implemented in the following manner.

The first network element sends the frame rate of the data flow to the policy control network element.

The first network element determines, from the policy control network element, the QoS profile that adapts to the frame rate of the data flow.

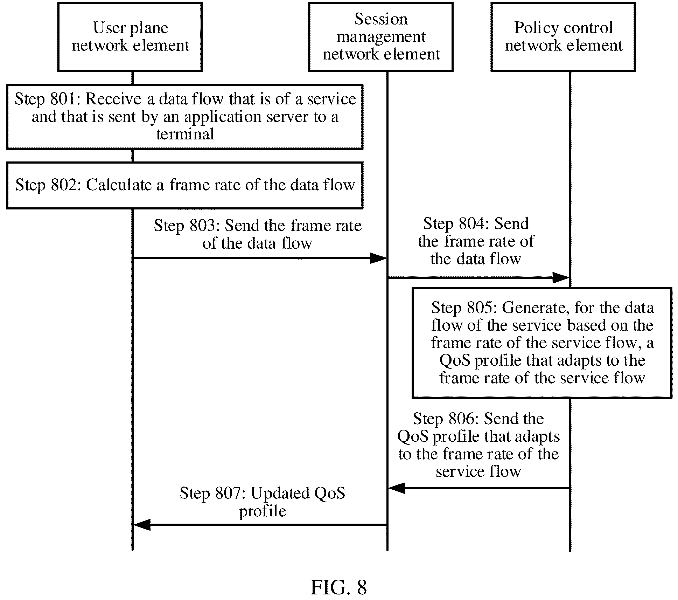

For example, for a specific implementation of step 503, refer to the embodiment shown in FIG. 8. Details are not described herein again in this embodiment of this application.

In another possible implementation of this application, step 503 may be implemented in the following manner: The first network element determines, from a QoS profile associated with each of the one or more frame rates, the QoS profile that adapts to the frame rate of the data flow.

For example, if the frame rate calculated by the first network element is 61 fps, and the first network element is configured with a QoS profile corresponding to 60 fps, a QoS profile corresponding to 30 fps, and a QoS profile corresponding to 45 fps, the first network element may determine the QoS profile corresponding to 60 fps as the QoS profile that adapts to the frame rate of the data flow.

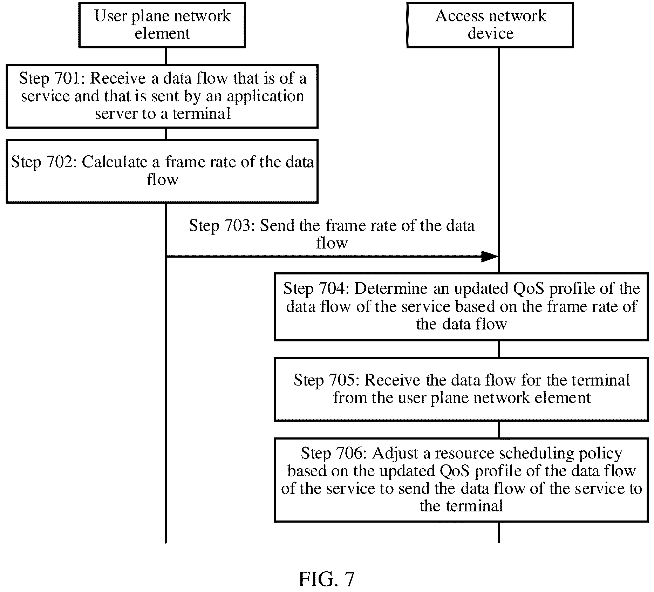

FIG. 7 shows a procedure of an adaptive data flow transmission method according to an embodiment of this application. A difference between the method and the method shown in FIG. 5 lies in that in the method, a first network element sends a determined frame rate of a data flow to an access network device. Specifically, as shown in FIG. 7, the method includes the following steps.

Step 701 and step 702 are the same as step 501 and step 502. Details are not described herein again.

Step 703: A user plane network element sends the frame rate of the data flow to the access network device accessed by a terminal. Correspondingly, the access network device receives the frame rate of the data flow of a service from the first network element.

Step 704: The access network device determines an updated QoS profile of the data flow of the service based on the frame rate of the data flow of the service.

For example, the access network device has one or more frame rates and a QoS profile corresponding to each frame rate. In this way, after obtaining the frame rate of the data flow of the service, the access network device may determine, based on the frame rate of the data flow, the updated QoS profile of the data flow of the service from the QoS profile corresponding to each frame rate.

For example, the access network device has a QoS profile 1 corresponding to 30 fps, a QoS profile 2 corresponding to 45 fps, and a QoS profile 3 corresponding to 60 fps. If the frame rate that is of the data flow of the service and that is received by the access network device is 45 fps or a frame rate, like 50 fps, close to 45 fps, the access network device may determine the QoS profile 2 as the updated QoS profile of the data flow of the service.

Optionally, first indication information is further configured in the access network device. The first indication information indicates to adaptively adjust the QoS profile of the data flow based on the frame rate of the data flow of the service.

For example, the access network device may obtain a first rule (for example, a PCC rule) from a policy control network element. The first rule includes the one or more frame rates, the QoS profile corresponding to each frame rate, and the first indication information.

Step 705: The access network device receives the data flow of the service from the user plane network element.

Step 706: The access network device adjusts a resource scheduling policy based on the updated QoS profile of the data flow of the service to transmit the data flow of the service to the terminal.

In a possible embodiment of this application, the method provided in this embodiment of this application may further include: The access network device obtains the first rule from the policy control network element.

In an example, the policy control network element obtains service configuration information of the service from an AF network element. Then, the policy control network element generates the first rule based on the service configuration information. Then, the policy control network element sends the first rule to the access network device and/or the first network element through a session management network element.

Specifically, the policy control network element may generate a PDR of the service by using information such as a frame rate detection indication and a data quintuple of the service as identification parameters. The policy control network element may also generate, based on one or more frame rates provided by the AF network element, a QoS requirement corresponding to the frame rate, and the like, a series of alternative QoS profiles (Alternative QoS profiles, AQP) corresponding to the frame rate of the service.

FIG. 8 shows a procedure of an adaptive data flow transmission method according to an embodiment of this application. A difference between the method and the method shown in FIG. 5 lies in that in the method, a first network element sends a calculated frame rate of a data flow to a policy control network element. Specifically, as shown in FIG. 8, the method includes the following steps.

Step 801 and step 802 are the same as step 501 and step 502. Details are not described herein again.

Step 803: The first network element sends the frame rate of the data flow to a session management network element. Correspondingly, the session management network element receives the frame rate of the data flow of a service from the first network element.

For example, in addition to sending the frame rate of the data flow to the session management network element, the first network element may further send indication information to the session management network element, to indicate that the frame rate of the data flow is different from a current transmission frame rate of the data flow, so that the session management network element determines to request the policy control network element to update a QoS profile of the data flow of the service.

Step 804: The session management network element sends the frame rate of the data flow of the service to the policy control network element. Correspondingly, the policy control network element receives the frame rate of the data flow of the service from the session management network element.

In an example, the session management network element may send a second message to the policy control network element, where the second message includes the data flow of the service. For example, the second message is used to request the policy control network element to update the QoS profile based on the frame rate of the service flow. Optionally, the second message may further include indication information, and the indication information is used to request the policy control network element to update the QoS profile based on the frame rate of the service flow. Optionally, the second message further indicates that the frame rate of the service flow is different from the current frame rate of the data flow of the service.

Optionally, the second message may further include an identifier of the service, so that the policy control network element determines the specific service for which the QoS profile of the data flow is to be updated.

According to step 803 and step 804, the first network element may transmit the frame rate of the data flow to the policy control network element through the session management network element.

Step 805: The policy control network element generates, for the data flow of the service based on the frame rate of the service flow, a QoS profile that adapts to the frame rate of the service flow, which may also be referred to as an updated QoS profile.

Specifically, the policy control network element may regenerate the QoS profile by updating QoS parameters (such as an MDBV and a UL PDB) of the service, to adapt to the frame rate of the data flow of the service.

Step 806: The policy control network element sends, to the session management network element, the QoS profile (namely, the updated QoS profile) that adapts to the frame rate of the service flow, and correspondingly, the session management network element receives the updated QoS profile from the policy control network element.

Step 807: The session management network element sends the updated QoS profile to an access network device and a user plane network element, so that the access network device and the first network element transmit the data flow of the service based on the updated QoS profile.

In an example, the session management network element may send the updated QoS profile to the first network element through an N4 interface. Alternatively, when one or more QoS profiles are configured in the first network element, the session management network element sends an indication to the first network element, to indicate the first network element to use one of the one or more QoS profiles as the updated QoS profile.

In an example, step 807 may be implemented in the following manner: The session management network element initiates an existing PDU session update procedure, to update original QoS profiles in the access network device and the first network element to the updated QoS profile. Specifically, the session management network element sends a PDU session modification message to an AMF network element, where the PDU session modification message includes the updated QoS profile, and the updated QoS profile includes an updated DL PDB. Then, the AMF network element sends the updated QoS profile to the access network device.

Optionally, after step 807, the following step may be further included: The first network element adjusts a resource scheduling policy based on the updated QoS profile of the data flow of the service, to transmit the data flow of the service.

In the embodiment shown in FIG. 8, the first network element feeds back the calculated frame rate of the data flow of the service to the policy control network element, and then the policy control network element updates the QoS profile of the data flow of the service based on the frame rate of the data flow of the service, to obtain the QoS profile that adapts to the frame rate of the data flow. Then, the policy control network element provides the QoS profile that adapts to the frame rate of the data flow to the first network element and the access network device through the session management network element, so that the access network device and the first network element transmit the data flow of the service based on the updated QoS profile. In this way, adaptive transmission of the data flow is implemented.

It should be noted that, when the first network element has one or more frame rates and a QoS profile corresponding to each frame rate, and the first network element calculates the frame rate of the data flow of the service, a process of sending the frame rate of the data flow of the service to the policy control network element may be omitted. Instead, the QoS profile that adapts to the frame rate of the data flow of the service is selected from the existing QoS profile corresponding to each frame rate in the first network element based on the frame rate of the data flow of the service, to transmit the data flow of the service.

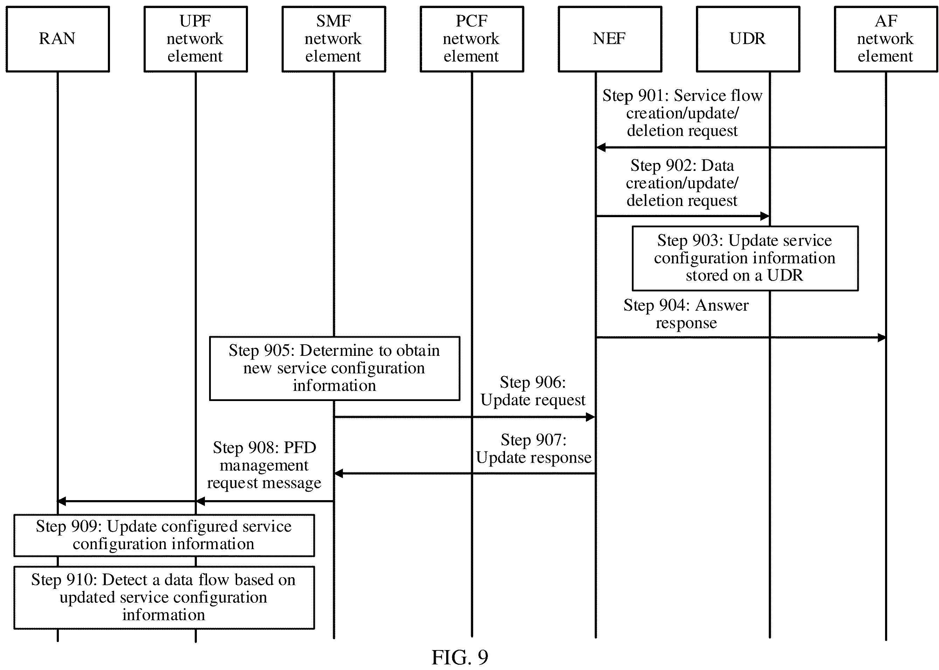

FIG. 9 is a schematic flowchart of configuring service configuration information for a network element according to an embodiment of this application. Specifically, an AF network element provides the service configuration information to a network element (for example, a UPF network element) in a 5G core network through an NEF. As shown in FIG. 9, the method includes the following steps.

Step 901: An AF network element sends a data flow creation/update/deletion request to an NEF function in a 5G network. Correspondingly, the NEF function receives the data flow creation/update/deletion request from the AF network element.

The data flow creation/update/deletion request includes service configuration information for adaptive QoS transmission of a service. In an example, the service configuration information includes one or more frame rates, a QoS requirement corresponding to each frame rate, and a frame rate detection related parameter.

In an example, the frame rate detection related parameter includes but is not limited to a frame rate detection periodicity, a first abnormality threshold, a frame rate count, and a second abnormality threshold.

Optionally, the service configuration information or the data flow creation/update/deletion request may further include frame rate detection indication information (corresponding to first indication information). The frame rate detection indication information indicates whether the 5G network needs to provide a frame rate-based QoS adaptive adjustment service. For example, the frame rate detection indication information is the first indication information, indicating that the 5G network needs to provide the frame rate-based QoS adaptive adjustment service. For example, the frame rate detection indication information is second indication information, indicating that the 5G network does not need to provide the frame rate-based QoS adaptive adjustment service.

In an example, when the AF network element is to add new service configuration information, the AF network element sends a data flow creation request to the NEF function in the 5G network. The data flow creation request includes the service configuration information.

In an example, when the AF network element prepares to update existing service configuration information, the AF network element sends a data flow update request. The data flow update request includes the service configuration information that is requested to be updated.

In an example, when the AF network element prepares to delete existing service configuration information, the AF network element sends a data flow deletion request. The data flow deletion request includes the service configuration information that is requested to be deleted.

Step 902: The NEF sends the data creation/update/deletion request to a UDR, and correspondingly, the UDR receives the data creation/update/deletion request from the NEF.

The data creation/update/deletion request includes the updated service configuration information.

For example, the data creation/update/deletion request is used to trigger the UDR to update service configuration information stored on the UDR.

According to step 902, the UDR may store latest service configuration information.

In a specific implementation, when the NEF prepares to add new service configuration information, the NEF sends a data management creation request (DM_Create Request) to the UDR. The data management request message includes the added service configuration information, or includes the updated service configuration information.

In another specific implementation, when the NEF prepares to update the existing service configuration information, the NEF sends a data management update request (DM_Update Request). The data management update request includes service configuration information for update, or includes updated service configuration information.

In another specific implementation, when the NEF prepares to delete the existing service configuration information, the NEF sends a data management deletion request (DM_Delete Request). The data management deletion request includes the service configuration information that is requested to be deleted. For example, the data management deletion request includes an application identifier and a service configuration identifier. The UDR adds, updates, or deletes the service configuration information based on the request of the NEF.

Step 903: The UDR updates the service configuration information stored on the UDR.

In a specific implementation, the UDR receives the data management creation request from the NEF, and the UDR adds the service configuration information to the UDR.

In another specific implementation, the UDR receives the data management update request from the NEF, and the UDR updates the service configuration information in the UDR.

In another specific implementation, the UDR receives the data management deletion request from the NEF, and the UDR deletes the existing service configuration information from the UDR.

Optionally, after step 903, the method provided in this embodiment of this application may further include the following steps.

Step 904: The NEF sends an answer response to the AF network element, to notify a processing result.

The answer response is used to notify the AF network element that the request is successfully processed. Certainly, if the NEF determines that the first request is not allowed or the NEF fails to update service data flow information in step 902, the answer response is used to notify the AF network element that the request fails to be processed. The answer response may be specifically a service data flow create response or a service data flow update response.

It may be understood that step 904 is an optional step.

Step 905: The SMF network element determines to obtain new service configuration information.

For example, a timer is configured on the SMF network element, and the SMF network element is triggered to obtain service configuration information each time specified duration is reached.

For another example, the SMF network element may subscribe to service configuration information from the NEF network element. In this way, when the service configuration information is updated, the NEF network element actively notifies the SMF network element to obtain new service configuration information.

For another example, the NEF network element periodically sends an update notification to the SMF network element, to notify the SMF network element whether the service configuration information is updated.

For another example, when the service configuration information is updated, the NEF network element actively notifies the SMF network element to obtain new service configuration information.

Step 906: The SMF network element sends an update request to the NEF, and correspondingly, the NEF receives the update request from the SMF network element. The update request is used to request to obtain new service configuration information.

Step 907: The NEF network element sends an update response to the SMF network element, and correspondingly, the SMF network element receives the update response from the NEF network element. The update response includes updated service configuration information, added service configuration information, and deleted service configuration information.

According to step 907, the SMF network element may update, based on the update response, the service configuration information stored by the SMF network element.

In step 906 and step 907, an example in which the SMF network element actively requests the NEF to obtain the service configuration information is used. In another implementation method, step 906 and step 907 may alternatively be replaced with: After receiving the added service configuration information, the updated service configuration information, or the deleted service configuration information, the NEF network element actively reports the newly added service configuration information, the updated service configuration information, or the deleted service configuration information to the SMF network element. Alternatively, in another implementation method, the SMF network element may actively request the UDR to obtain the service configuration information.

To enable the UPF/RAN to detect a related service configuration based on the latest service configuration information, optionally, after step 907, the following steps may be further included.

Step 908: The SMF network element sends a PFD management request message to the UPF network element/RAN, and correspondingly, the UPF network element/RAN receives the PFD management request message, to obtain updated/added/deleted service configuration information.

Step 909: The UPF network element/RAN updates the service configuration information configured in the UPF network element/RAN.

Optionally, after step 909, the method may further include: The UPF network element/RAN sends a management request response message to the SMF network element, to indicate that the service configuration information configured in the UPF network element/RAN has been updated.

Step 910: The UPF network element/RAN detects the data flow based on the updated service configuration information.

In the solution shown in FIG. 9, the AF network element sends the data flow creation/update/deletion request to the NEF function in the 5G network, and sends the service configuration information for adaptive QoS transmission of the service to the 5G network. In this way, the UPF network element can sense and report the frame rate of the data flow of the service, to adjust the QoS profile of the service to adapt to a current data flow feature of the service, so as to optimize network resource scheduling.

An existing session procedure is used to configure an adaptive transmission requirement of the service, so that the network can support UPF sensing of the frame rate of the service and dynamic adaptation of the QoS profile of the service. In this way, a system architecture is slightly changed, and impact on a terminal and an application is avoided.

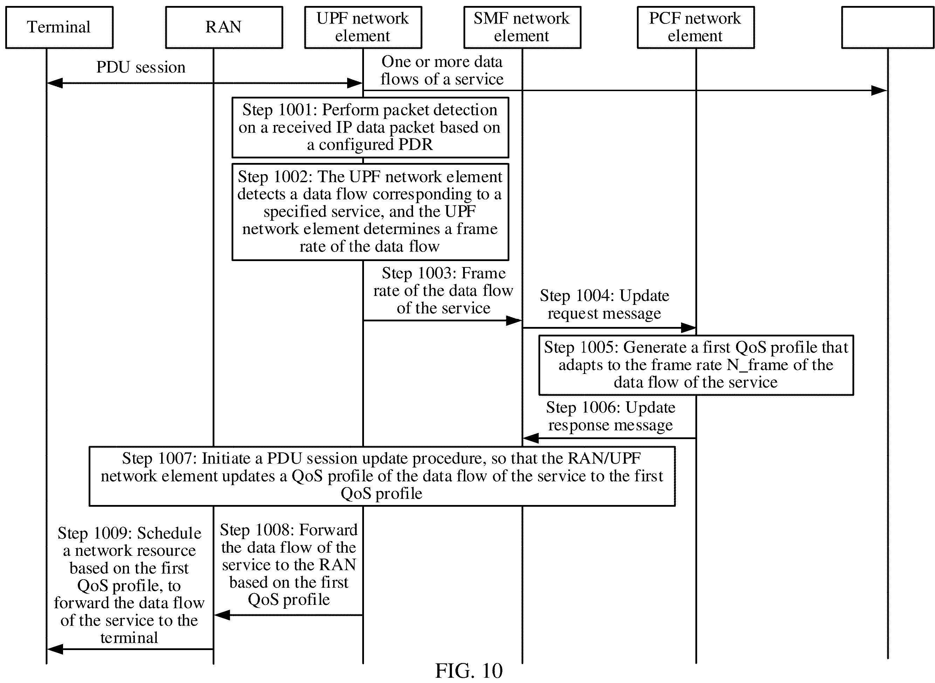

FIG. 10 is a specific flowchart of an adaptive data flow transmission method according to an embodiment of this application. In the method, for example, a first network element is a UPF network element, a session management network element is an SMF network element, and a policy control network element is a PCF network element. The method includes the following steps.

Step 1001: The UPF network element performs packet detection on a received IP data packet based on a configured PDR.

It may be understood that, before step 1001, a terminal has completed network registration and completed PDU session establishment, a data connection between the terminal and an application server AS has been established, and the application server starts to send a data flow of a service to the terminal.

Step 1002: The UPF network element detects a data flow corresponding to a specified service, and the UPF network element determines a frame rate of the data flow.

For a specific implementation in which the UPF network element calculates the frame rate of the data flow of the service, refer to the descriptions in the foregoing embodiments. Details are not described herein again.

Step 1003: The UPF network element sends a frame rate N_frame of the data flow of the service to the SMF network element. Correspondingly, the SMF network element receives the frame rate N_frame of the data flow of the service from the UPF network element.

In an example, the UPF network element compares the calculated frame rate N_frame of the data flow of the service with a current frame rate of the service. If the frame rate N_frame of the data flow of the service is different from the current frame rate of the service, the UPF network element performs step 1003.

Step 1004: The SMF network element sends an update request message to the PCF network element. Correspondingly, the PCF network element receives the update request message from the SMF network element.

For example, the update request message is used to request the PCF network element to update a QoS profile of the data flow.

In an example, the update request message includes the frame rate N_frame of the data flow of the service.

Optionally, the update request message may further include second indication information. For example, the second indication information is used to request the PCF network element to update the QoS profile of the data flow of the service based on the frame rate N_frame of the data flow of the service.

Step 1005: The PCF network element generates a first QoS profile that adapts to the frame rate N_frame of the data flow of the service.

Specifically, the PCF network element may generate the first QoS profile by updating QoS parameters (such as an MDBV and a UL PDB) of the service, to adapt to the frame rate N_frame of the service.

Step 1006: The PCF network element sends an update response message to the SMF network element, and correspondingly, the SMF network element receives the update response message from the PCF network element. The update response message includes the first QoS profile.

Step 1007: The SMF network element initiates a PDU session update procedure, so that the RAN/UPF network element updates the QoS profile of the data flow of the service to the first QoS profile.

Certainly, the SMF network element may alternatively send the first QoS profile to the UPF network element through an N4 interface. When the UPF network element has one or more QoS profiles, the SMF network element may indicate the UPF network element to use the first QoS profile in the one or more QoS profiles as the QoS profile for transmitting the data flow.

Specifically, the SMF network element sends a PDU session modification message to the AMF network element, where the PDU session modification message includes the first QoS profile of the data flow of the service. The first QoS profile includes an updated DL PDB.

For example, the AMF network element sends the first QoS profile to the RAN. Correspondingly, the RAN receives the first QoS profile sent by the AMF network element.

Optionally, in step 1008, after receiving the first QoS profile, the UPF network element sends the data flow of the service to the RAN based on the first QoS profile.

Optionally, after the RAN obtains the first QoS profile, if the RAN subsequently receives the data flow of the service sent by the UPF network element, the RAN performs the following step 1009.

Step 1009: When receiving the data flow of the service from the UPF network element, the RAN schedules a network resource based on the first QoS profile, to forward the data flow of the service to the terminal.

In the embodiment shown in FIG. 10, the UPF network element has a capability of sensing the frame rate of the service, that is, calculates the frame rate of the data flow by using the data flow feature of the service, and dynamically updates the QoS profile by using an existing PDU session modification procedure. In this way, a system architecture is slightly changed, and impact on the terminal and an application is avoided.

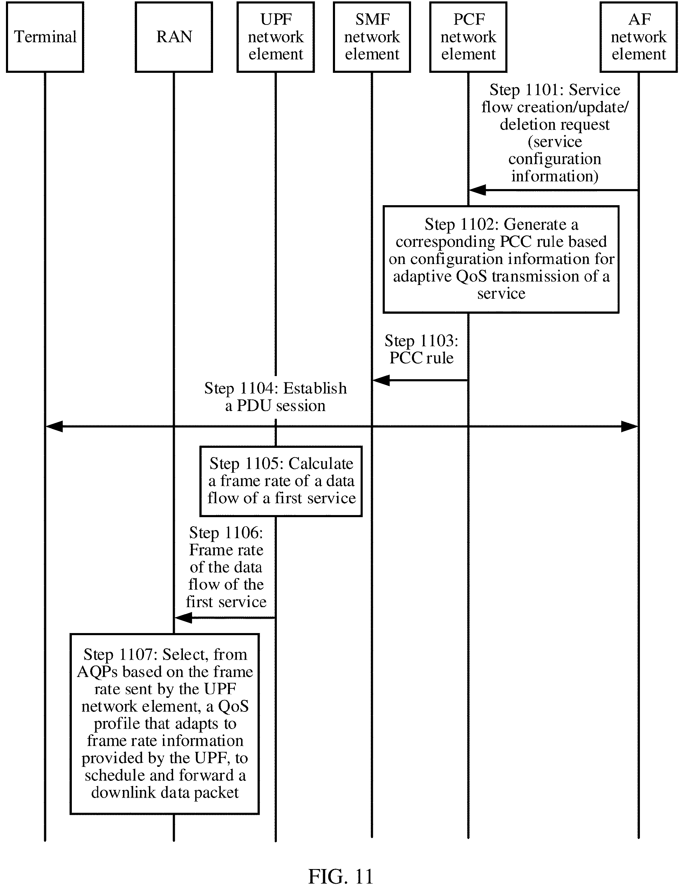

FIG. 11 is a specific schematic flowchart of an adaptive data flow transmission method according to an embodiment of this application. The method includes the following steps.

Step 1101: A PCF network element obtains configuration information for adaptive QoS transmission of a service. For example, as shown in FIG. 11, an AF network element sends a data flow creation/update/deletion request to the PCF network element in a 5G network, to send the configuration information for the adaptive QoS transmission of the service to the PCF network element in the 5G network. Certainly, the PCF network element may alternatively obtain the configuration information for the adaptive QoS transmission of the service from an NEF. For example, the AF network element sends the configuration information for the adaptive QoS transmission of the service to the NEF, and then the PCF network element obtains the configuration information for the adaptive QoS transmission of the service from the NEF.

Step 1102: The PCF network element generates a corresponding PCC rule based on the configuration information for the adaptive QoS transmission of the service.

For example, the PCC rule includes service data packet detection rules (PDU Detection Rules, PDR), and one or more alternative QoS profiles (Alternative QoS profiles, AQPs). Specifically, the PCF network element may generate the PDR of the service by using information such as a frame rate detection indication and a data quintuple of the service as identification parameters. Alternatively, the PCF network element may generate, based on one or more frame rates provided by the AF network element, a QoS requirement corresponding to the frame rate, and the like, a series of service AQPs corresponding to the frame rate of the service.

Step 1103: The PCF network element configures a PCC rule for at least one of an SMF network element, a user plane network element, and a RAN network element. Correspondingly, at least one of the SMF network element, the user plane network element, and the RAN network element receives the PCC rule of the service from the PCF network element. The PCC rule includes the service frame rate detection indication, the PDR and the AQP of the service, and the like.

Step 1104: The terminal has completed network registration and completed PDU session establishment, a data connection between the terminal and an application server AS has been established, and the AS starts to send downlink data.

Step 1105: The UPF network element performs packet detection on the received IP data packet based on the configured packet detection rule, and detects the data flow corresponding to the specified service, and the UPF network element calculates the frame rate of the data flow of the service.

Step 1106: The UPF network element sends the calculated frame rate N_frame of the data flow of the service to the RAN. Correspondingly, the RAN receives the frame rate N_frame of the data flow of the service from the UPF network element.

For example, when the UPF network element determines that the calculated frame rate of the data flow of the service is different from the frame rate currently corresponding to the data flow of the service, the UPF network element sends the calculated frame rate N_frame of the data flow of the service to the RAN.

It may be understood that, if the UPF network element receives the PCC rule, when sending a downlink data packet of the data flow of the service to the RAN, the UPF network element may schedule and forward the downlink data packet based on the QoS profile corresponding to the frame rate of the data flow of the service.

For example, the UPF network element may pack the frame rate of the data flow of the service into an empty GTP-U packet and send the GTP-U packet to the RAN, or may carry the frame rate of the data flow of the service to a GTP-U header of a data packet and send the data packet to the RAN.

Step 1107: When receiving the downlink data packet from the UPF network element, the RAN selects, from the AQPs based on the frame rate sent by the UPF network element, a QoS profile that adapts to the frame rate provided by the UPF network element, to schedule and forward the downlink data packet.

For example, when receiving the downlink data packet from the UPF network element, the RAN determines that the downlink data packet is a data packet of the data flow of the service, and selects, from the AQPs based on the frame rate sent by the UPF network element, the QoS profile that adapts to frame rate information provided by the UPF, to schedule and forward the downlink data packet.

The foregoing mainly describes the solutions in embodiments of this application from a perspective of interaction between network elements. It may be understood that, to implement the foregoing functions, the network elements such as the first network element, the access network device, the session management network element, and the policy control network element include corresponding structures and/or software modules for performing the functions. A person skilled in the art should be easily aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed based on the first network element, the access network device, the session management network element, and the policy control network element in the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. In actual implementation, another division manner may be used.

The foregoing describes the methods in embodiments of this application with reference to FIG. 5 to FIG. 11. The following describes a communication apparatus that is provided in embodiments of this application and that performs the foregoing methods. A person skilled in the art may understand that the methods and the apparatuses may be mutually combined and referenced. The communication apparatus provided in embodiments of this application may perform the steps performed by the first network element, the access network device, the session management network element, and the policy control network element in the foregoing adaptive data flow transmission method.

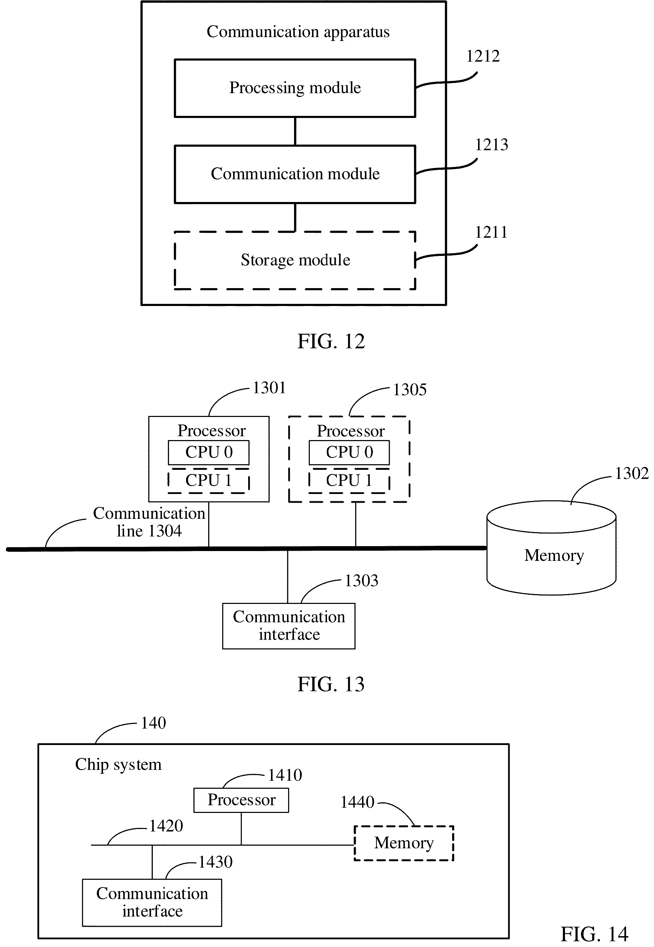

When an integrated unit is used, FIG. 12 shows a communication apparatus in the foregoing embodiments. The communication apparatus may include a communication module 1213 and a processing module 1212.

In an optional implementation, the communication apparatus may further include a storage module 1211, configured to store program code and data of the communication apparatus.

In an aspect, the communication apparatus is a first network element or a chip used in a first network element. In this case, the communication module 1213 is configured to support the communication apparatus in communicating with an external network element (for example, an application server, a session management network element, or an access network device). For example, the communication module 1213 is configured to perform signal receiving and sending operations performed by the first network element in the foregoing method embodiments. The processing module 1212 is configured to perform a signal processing operation performed by the first network element in the foregoing method embodiments.

In an example, the communication module 1213 is configured to perform a receiving action performed by the first network element in step 501 in FIG. 5 in the foregoing embodiments. The processing module 1212 is configured to perform step 502 and step 503 in FIG. 5 in the foregoing embodiments. The communication module 1213 is configured to perform a sending action performed by the first network element in step 504 in FIG. 5 in the foregoing embodiments.

In another aspect, the communication apparatus is a policy control network element or a chip used in a policy control network element. In this case, the communication module 1213 is configured to support the communication apparatus in communicating with an external network element (for example, a session management network element). For example, the communication module 1213 is configured to perform signal receiving and sending operations performed by the policy control network element in the foregoing method embodiments. The processing module 1212 is configured to perform a signal processing operation performed by the policy control network element in the foregoing method embodiments.

In an example, the communication module 1213 is configured to perform the receiving action in step 804 and the sending action in step 806 in FIG. 8 in the foregoing embodiments. The processing module 1212 is configured to perform step 805 in FIG. 8.

In another aspect, the communication apparatus is an access network device or a chip used in an access network device. In this case, the communication module 1213 is configured to support the communication apparatus in communicating with an external network element (for example, a user plane network element). For example, the communication module 1213 is configured to perform signal receiving and sending operations performed by the access network device in the foregoing method embodiments. The processing module 1212 is configured to perform a signal processing operation performed by the access network device in the foregoing method embodiments.

In an example, the communication module 1213 is configured to perform the receiving action in step 703 and the sending action in step 706 in FIG. 7 in the foregoing embodiments. The processing module 1212 is configured to perform step 704 and step 705 in FIG. 7.

The processing module 1212 may be a processor or controller, for example, may be a central processing unit, a general-purpose processor, a digital signal processor, an application-specific integrated circuit, a field programmable gate array or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The communication module may be a transceiver, a transceiver circuit, a communication interface, or the like. The storage module may be a memory.

When the processing module 1212 is a processor 1301 or a processor 1305, the communication module 1213 is a communication interface 1303, and the storage module 1211 is a memory 1302, the communication apparatus in this application may be a communication device shown in FIG. 13.

FIG. 13 is a diagram of a hardware structure of the communication device according to an embodiment of this application. For structures of the first network element, the session management network element, the access network device, and the policy control network element in embodiments of this application, refer to the diagram of the structure of the communication device shown in FIG. 13. The communication device includes a processor 1301, a communication line 1304, and at least one communication interface (for example, a communication interface 1303 is used as an example for description in FIG. 13).

The processor 1301 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1304 may include a channel for transmitting information between the foregoing components.

The communication interface 1303 is configured to exchange information with another apparatus by using, for example, any type of apparatus like a transceiver, and is configured to communicate with another device or a communication network, for example, an Ethernet, a radio access network (radio access network, RAN), or a wireless local area network (wireless local area network, WLAN).

Optionally, the communication device may further include a memory 1302.

The memory 1302 may be a read-only memory (read-only memory, ROM), another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor through the communication line 1304. The memory may alternatively be integrated with the processor.

The memory 1302 is configured to store computer-executable instructions for performing the solutions of this application, and is controlled and executed by the processor 1301. The processor 1301 is configured to execute the computer-executable instructions stored in the memory 1302, to implement an adaptive data flow transmission method provided in the following embodiments of this application.

It may be understood that when the communication device is an access network device, the communication interface 1303 may be replaced with a transceiver.

Optionally, the computer-executable instructions in this embodiment of this application may also be referred to as application program code. This is not specifically limited in embodiments of this application.

During specific implementation, in an embodiment, the processor 1301 may include one or more CPUs, for example, a CPU 0 and a CPU 1 in FIG. 13.

During specific implementation, in an embodiment, the communication device may include a plurality of processors, for example, a processor 1301 and a processor 1305 in FIG. 13. Each of the processors may be a single-core (single-CPU) processor, or may be a multi-core (multi-CPU) processor. The processor herein may be one or more devices or circuits, and/or a processing core configured to process data (for example, computer program instructions).

For steps performed by the processor 1301 and the processor 1305, refer to the steps performed by the processing module 1212. For steps performed by the communication interface 1303, refer to the steps performed by the communication module 1213.

FIG. 14 is a diagram of a structure of a chip 140 according to an embodiment of this application. The chip 140 includes one or two or more (including two) processors 1410 and a communication interface 1430.

Optionally, the chip 140 further includes a memory 1440, and the memory 1440 may include a read-only memory and a random access memory and provide operation instructions and data for the processor 1410. A part of the memory 1440 may further include a non-volatile random access memory (non-volatile random access memory, NVRAM).

In some implementations, the memory 1440 stores the following elements, an execution module or a data structure, a subset thereof, or an extended set thereof.

In this embodiment of this application, a corresponding operation is performed by invoking the operation instructions stored in the memory 1440 (the operation instructions may be stored in an operating system).

In a possible implementation, structures of the first network element, the session management network element, the policy control network element, and the access network device are similar, and different apparatuses may use different chips to implement respective functions.

The processor 1410 controls a processing operation of any one of the first network element, the session management network element, the policy control network element, and the access network device. The processor 1410 may also be referred to as a central processing unit (central processing unit, CPU).

The memory 1440 may include a read-only memory and a random access memory, and provide instructions and data to the processor 1410. A part of the memory 1440 may further include an NVRAM. For example, during application, the memory 1440, the communication interface 1430, and the memory 1440 are coupled together through a bus system 1420. In addition to a data bus, the bus system 1420 may further include a power bus, a control bus, a status signal bus, and the like. However, for clear description, various buses are marked as the bus system 1420 in FIG. 14.

The methods disclosed in the foregoing embodiments of this application may be applied to the processor 1410, or may be implemented by the processor 1410. The processor 1410 may be an integrated circuit chip, and has a signal processing capability. In an implementation process, the steps in the foregoing methods can be performed by using a hardware integrated logic circuit in the processor 1410, or by using instructions in a form of software. The processor 1410 may be a general-purpose processor, a digital signal processor (digital signal processor, DSP), an ASIC, a field-programmable gate array (field-programmable gate array, FPGA) or another programmable logic device, a discrete gate, a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 1440, and the processor 1410 reads information in the memory 1440 and completes the steps in the foregoing methods in combination with hardware of the processor.

In a possible implementation, the communication interface 1430 is configured to perform receiving and sending steps performed by the first network element in the embodiment shown in FIG. 5. The processor 1410 is configured to perform a processing step performed by the first network element in the embodiment shown in FIG. 5.

In a possible implementation, the communication interface 1430 is configured to perform receiving and sending steps performed by the access network device in the embodiment shown in FIG. 7. The processor 1410 is configured to perform a processing step performed by the access network device in the embodiment shown in FIG. 7.

In a possible implementation, the communication interface 1430 is configured to perform receiving and sending steps performed by the policy control network element in the embodiment shown in FIG. 8. The processor 1410 is configured to perform a processing step performed by the policy control network element in the embodiment shown in FIG. 8.

The communication module may be a communication interface of the apparatus, and is configured to receive a signal from another apparatus. For example, when the apparatus is implemented as a chip, the communication module is a communication interface used by the chip to receive a signal from or send a signal to another chip or apparatus.

In an aspect, a computer-readable storage medium is provided. The computer-readable storage medium stores instructions. When the instructions are run, the functions performed by the first network element in FIG. 5 to FIG. 8 are implemented.

In an aspect, a computer-readable storage medium is provided. The computer-readable storage medium stores instructions. When the instructions are run, the functions performed by the access network device in FIG. 7 are implemented.

In an aspect, a computer-readable storage medium is provided. The computer-readable storage medium stores instructions. When the instructions are run, the functions performed by the policy control network element in FIG. 8 are implemented.

In an aspect, a computer program product including instructions is provided. The computer program product includes the instructions. When the instructions are run, the functions performed by the access network device in FIG. 7 are implemented.

In an aspect, a computer program product including instructions is provided. The computer program product includes the instructions. When the instructions are run, the functions performed by the first network element in FIG. 5 to FIG. 8 are implemented.

In an aspect, a computer program product including instructions is provided. The computer program product includes the instructions. When the instructions are run, the functions performed by the policy control network element in FIG. 8 are implemented.

In an aspect, a chip system is provided. The chip system is used in a first network element. The chip system includes at least one processor and a communication interface. The communication interface is coupled to the at least one processor. The processor is configured to run instructions, to implement the functions performed by the first network element in FIG. 5 to FIG. 8.

In an aspect, a chip system is provided. The chip system is used in a policy control network element. The chip system includes at least one processor and a communication interface. The communication interface is coupled to the at least one processor. The processor is configured to run instructions, to implement the functions performed by the policy control network element in FIG. 8.

In an aspect, a chip system is provided. The chip system is used in an access network device. The chip system includes at least one processor and a communication interface. The communication interface is coupled to the at least one processor. The processor is configured to run instructions, to implement the functions performed by the access network device in FIG. 7.

An embodiment of this application provides a communication system. The communication system includes a first network element. The first network element is configured to perform functions performed by the first network element in FIG. 5 to FIG. 8. Optionally, the communication system may further include an access network device and a policy control network element. The access network device is configured to perform the steps in the embodiment shown in FIG. 7. The policy control network element is configured to perform functions performed by the policy control network element in FIG. 8.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. An adaptive data flow transmission method, comprising:
receiving a data flow that is of a service and that is sent by an application server to a terminal, wherein the data flow comprises one or more protocol data unit sets each comprising one or more downlink data packets;
determining a frame rate of the data flow;
determining, based on the frame rate of the data flow, a QoS profile that adapts to the frame rate of the data flow; and
transmitting the data flow based on the QoS profile that adapts to the frame rate of the data flow.

2. The method according to claim 1, wherein the frame rate of the data flow is determined by an average of n time intervals; and
the time interval is a time difference between downlink data packets that are in two adjacent protocol data unit sets of the data flow and that first arrive at a first network element, wherein n is an integer greater than or equal to 1.

3. The method according to claim 2, wherein the frame rate of the data flow is a frame rate, in one or more frame rates, that is closest to the average of the n time intervals.

4. The method according to any one of claims 1 to 3, wherein
determining the frame rate of the data flow comprises:
if the frame rate of the data flow changes during a period prior to a first time point, and the frame rate of the data flow remains unchanged during a period after the first time point, determining the frame rate of the data flow based on the n time intervals during the period after the first time point.

5. The method according to any one of claims 1 to 3, wherein the frame rate of the data flow is determined by a quantity of protocol data unit sets that arrive at the first network element during a period.

6. The method according to claim 5, wherein the frame rate of the data flow is a frame rate, in the one or more frame rates, that is closest to the quantity of protocol data unit sets that arrive at the first network element during the period.

7. The method according to claim 5 or 6, wherein
determining the frame rate of the data flow comprises:
if the frame rate of the data flow changes during a period prior to a first time point, and the frame rate of the data flow remains unchanged during a period after the first time point, determining the frame rate of the data flow based on a quantity of protocol data unit sets received by the first network element during the period of time after the first time point.

8. The method according to claim 4 or 7, wherein if an absolute value of a deviation between two adjacent time intervals in at least one count is greater than or equal to a first abnormality threshold, it is determined that the frame rate of the data flow has changed.

9. The method according to any one of claims 1 to 8, wherein the method further comprises:
sending the frame rate of the data flow, wherein the frame rate of the data flow is used to determine the quality of service QoS profile that adapts to the frame rate of the data flow.

10. The method according to claim 9, wherein the sending the frame rate of the data flow comprises:
if the frame rate of the data flow is different from a frame rate associated with a QoS profile configured for the data flow, sending the frame rate of the data flow.

11. The method according to any one of claims 1 to 10, wherein the method further comprises:
receiving a first message, wherein the first message comprises service configuration information of the service, and the service configuration information is used to determine to adjust the QoS profile of the data flow based on the frame rate of the data flow of the service; and
determining, based on the first message, the frame rate of the data flow and/or to adjust the QoS profile of the data flow based on the frame rate of the data flow of the service.

12. The method according to claim 11, wherein the service configuration information comprises one or more frame rates, a QoS requirement corresponding to each frame rate, and a frame rate detection related parameter; and
the frame rate detection related parameter comprises at least one of the following: a frame rate detection periodicity, the first abnormality threshold, a frame rate count, and a second abnormality threshold, wherein
the first abnormality threshold is used to determine whether the frame rate of the data flow changes;
the second abnormality threshold is used to determine whether the frame rate of the data flow is the same as the frame rate associated with the QoS profile configured for the data flow;
the frame rate detection periodicity is a periodicity used to determine the frame rate of the data flow; and
the frame rate count is a quantity of time intervals required for determining the frame rate of the data flow.

13. The method according to claim 11 or 12, wherein the service configuration information further comprises first indication information, or the first message further comprises the first indication information; and
the first indication information indicates to adjust the QoS profile of the data flow based on the frame rate of the data flow of the service and/or determine the frame rate of the data flow.

14. The method according to any one of claims 1 to 13, wherein the determining, based on the frame rate of the data flow, the QoS profile that adapts to the frame rate of the data flow comprises:
sending the frame rate of the data flow to a policy control network element; and
determining, from the policy control network element, the QoS profile that adapts to the frame rate of the data flow.

15. The method according to any one of claims 1 to 14, wherein the determining the QoS profile that adapts to the frame rate of the data flow comprises:
determining, from a QoS profile associated with each of the one or more frame rates, the QoS profile that adapts to the frame rate of the data flow.

16. The method according to claim 15, wherein the method further comprises:
receiving the one or more frame rates and the QoS profile associated with each frame rate.

17. An adaptive data flow transmission method, comprising:
receiving a second message, wherein the second message comprises a frame rate that is of a data flow of a service and that is determined by a first network element, and the second message is used to request to update a quality of service QoS profile of the data flow based on the frame rate of the data flow;
determining, based on the frame rate of the data flow and a QoS requirement corresponding to the frame rate of the data flow, a QoS profile that adapts to the frame rate of the data flow; and
sending the QoS profile that adapts to the frame rate of the data flow.

18. The method according to claim 17, wherein the method further comprises:
receiving service configuration information of the service from an AF network element, wherein the service configuration information comprises one or more frame rates and a QoS requirement corresponding to each frame rate; and
before updating the QoS profile of the data flow based on the frame rate of the data flow and the QoS requirement corresponding to the frame rate of the data flow, the method further comprises:
determining, based on the frame rate of the data flow and from the QoS requirement corresponding to each frame rate, the QoS requirement corresponding to the frame rate of the data flow.

19. An adaptive data flow transmission method, comprising:
obtaining service configuration information, wherein the service configuration information comprises at least one or more frame rates and a QoS requirement associated with each frame rate;
obtaining, based on the service configuration information, a QoS profile associated with each frame rate; and
sending the one or more frame rates and the QoS profile associated with each frame rate.

20. A communication apparatus, comprising a processing unit and a communication unit, wherein the processing unit is configured to perform processing steps in the method according to any one of claims 1 to 16, and the communication unit is configured to perform receiving/sending steps in the method according to any one of claims 1 to 16; or the processing unit is configured to perform processing steps in the method according to any one of claims 17 to 19, and the communication unit is configured to perform receiving/sending steps in the method according to any one of claims 17 to 19.

21. A computer-readable storage medium, wherein the readable storage medium stores instructions, and when the instructions are executed, the method according to any one of claims 1 to 16 is implemented, or the method according to any one of claims 17 to 19 is implemented.

22. A chip system, wherein the chip system comprises a processor, the processor is coupled to a communication interface, the processor is configured to run a computer program or instructions to implement the method according to any one of claims 1 to 16 or the method according to any one of claims 17 to 19, and the communication interface is configured to communicate with a module other than the chip.

23. A communication apparatus, comprising at least one processor, wherein the at least one processor is coupled to a memory, and the at least one processor is configured to run instructions stored in the memory, to perform the method according to any one of claims 1 to 16, or implement the method according to any one of claims 17 to 19.

24. A communication system, comprising at least a first network element, wherein the first network element is configured to perform the method according to any one of claims 1 to 16.
